(19) Europäisches Patentamt
European Patent Office
Office européen des brevets

(11) EP 3 495 401 B1

# (12) EUROPEAN PATENT SPECIFICATION

(45) Date of publication and mention of the grant of the patent:
**13.10.2021 Bulletin 2021/41**

(21) Application number: **17836915.3**

(22) Date of filing: **31.07.2017**

(51) Int Cl.:
*C08G 18/00* (2006.01) *C08K 5/5399* (2006.01)
*C08L 75/04* (2006.01) *C08G 101/00* (2006.01)
*C08G 18/48* (2006.01) *C08G 18/63* (2006.01)
*C08G 18/32* (2006.01) *C08G 18/20* (2006.01)
*C08G 18/18* (2006.01) *C08G 18/76* (2006.01)
*C08G 18/65* (2006.01) *C08G 18/66* (2006.01)
*C08G 18/40* (2006.01)

(86) International application number:
**PCT/JP2017/027725**

(87) International publication number:
**WO 2018/025810 (08.02.2018 Gazette 2018/06)**

## (54) METHOD FOR REDUCING VOLATILE ORGANIC COMPOUND, METHOD FOR PRODUCING POLYURETHANE FOAM AND RESIN PREMIX

VERFAHREN ZUR REDUZIERUNG FLÜCHTIGER ORGANISCHER VERBINDUNGEN, VERFAHREN ZUR HERSTELLUNG VON POLYURETHANSCHAUMSTOFF UND HARZVORMISCHUNG

PROCÉDÉ DE RÉDUCTION D’UN COMPOSÉ ORGANIQUE VOLATIL, PROCÉDÉ DE PRODUCTION DE MOUSSE DE POLYURÉTHANE ET PRÉMÉLANGE DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2016 JP 2016154753**

(43) Date of publication of application:
**12.06.2019 Bulletin 2019/24**

(73) Proprietors:
- **Mitsui Chemicals&SKC Polyurethanes Inc.
Tokyo 105-7122 (JP)**
- **Mitsui Chemicals & SKC Polyurethanes Inc.
Ulsan (KR)**

(72) Inventors:
- **MARUOKA, Yusuke
Sodegaura-shi
Chiba 299-0265 (JP)**
- **MATSUZAKA, Yasuhiro
Tokyo 105-7122 (JP)**
- **USAKA, Kazuto
Sodegaura-shi
Chiba 299-0265 (JP)**
- **PARK, Changha
Ulsan 44782 (KR)**
- **LEE, Sungho
Ulsan 44782 (KR)**
- **KANG, Joonseok
Ulsan 44782 (KR)**

(74) Representative: **Hoffmann Eitle
Patent- und Rechtsanwälte PartmbB
Arabellastraße 30
81925 München (DE)**

(56) References cited:
**JP-A- H1 160 722**
**JP-A- H10 158 388**
**JP-A- H10 273 512**
**JP-A- 2005 154 783**
**JP-A- H1 160 722**
**JP-A- H10 158 388**
**JP-A- 2001 106 780**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 495 401 B1

**Description**

TECHNICAL FIELD

The present invention relates to a method for reducing a volatile organic compound, a method for producing a polyurethane foam, and a resin premix.

BACKGROUND ART

A polyurethane foam is obtained by reacting a resin premix containing a polyol, a catalyst, and a blowing agent with a polyisocyanate. The polyurethane foam is, for example, used in various fields such as cushions.

Meanwhile, a volatile organic compound (VOC) such as acetaldehyde and formaldehyde may be contained in the polyurethane foam. When the volatile organic compound (VOC) is emitted in the air, it may influence the global environment and the human body, so that a reduction of the volatile organic compound (VOC) from the polyurethane foam is required.

To be more specific, for example, it has been proposed that when a polyurethane molded article is molded from a polyol mixture prepared from a polyisocyanate, a polyol, a catalyst, and a cross-linking agent, a hydrazine compound (for example, dihydrazide adipate or the like) as an aldehyde scavenger is added to the polyol mixture in advance (ref: for example, the following Patent Document 1).

Citation List

Patent Document

Patent Document 1: Japanese Unexamined Patent Publication No. 2006-182825

SUMMARY OF THE INVENTION

PROBLEM TO BE SOLVED BY THE INVENTION

Meanwhile, a reduction amount of the volatile organic compound (VOC) required in various fields varies in accordance with its purpose and use, so that it is desirable that the required level of the reduction amount is efficiently satisfied.

However, the hydrazine compound described in Patent Document 1 can reduce the volatile organic compound (VOC), and the reduction amount of the volatile organic compound (VOC) is fixed regardless of the used amount of the hydrazine compound and there is a limit therein. Furthermore, there is also a disadvantage that a degree of reduction of the volatile organic compound (VOC) cannot be adjusted.

The present invention provides a method for reducing a volatile organic compound capable of adjusting a degree of reduction of the volatile organic compound (VOC) and efficiently reducing the volatile organic compound (VOC), furthermore, a method for producing a polyurethane foam having a volatile organic compound (VOC) reduced, and a resin premix.

MEANS FOR SOLVING THE PROBLEM

The present invention [1] includes a method for reducing a volatile organic compound in a polyurethane foam, wherein the polyurethane foam contains a compound represented by the following formula (1);

the method comprising a preparing step of preparing a resin premix containing a polyol, and a polyisocyanate, an adding step of adding the compound represented by the following formula (1) to the resin premix, and a foaming step of mixing and foaming the resin premix and the polyisocyanate.

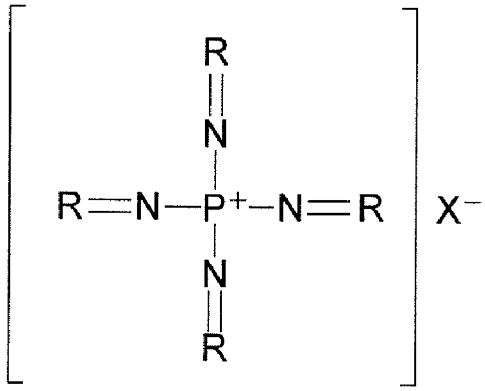

(1)

] (wherein, -N=R represents the following partial structural formula (A) or the following partial structural formula (B), and $X^-$ represents an anion.)

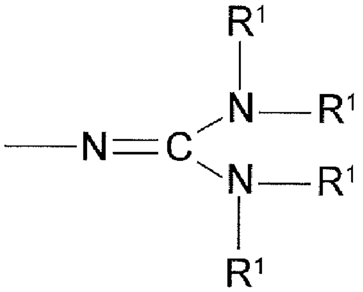

(A)

(wherein, $R^1$s are the same or different from each other, represent a hydrogen atom or a hydrocarbon group having a carbon number of 1 to 20, and may be bonded to each other to form a ring structure.)

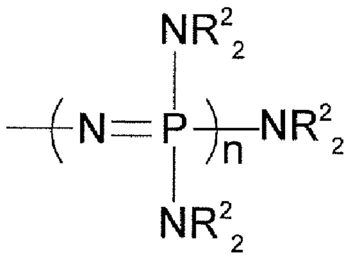

(B)

(wherein, $R^2$s are the same or different from each other and represent a hydrogen atom or a hydrocarbon group having a carbon number of 1 to 20. $R^2$s may be bonded to each other to form a ring structure. "n" represents an integral number of 0 to 3. "n" corresponding to at least one R of the four Rs in the formula (1) is not 0.)

The present invention [2] includes the method for reducing a volatile organic compound described in the above-described [1], wherein the volatile organic compound is reduced according to a linear function in accordance with the amount of the compound represented by the above-described formula (1).

The present invention [3] includes the method for reducing a volatile organic compound described in the above-described [1] or [2], wherein the polyurethane foam is a reaction product of a resin premix containing a polyol, and a polyisocyanate, and the content ratio of a cation portion of the compound represented by the above-described formula (1) with respect to the total amount of the polyol is 500 ppm or more.

The present invention [4] includes a method for producing a polyurethane foam having a volatile organic compound reduced including a preparing step of preparing a resin premix containing a polyol, and a polyisocyanate, an adding step of adding a compound represented by the following formula (1) to the resin premix, and a foaming step of mixing and foaming the resin premix and the polyisocyanate.

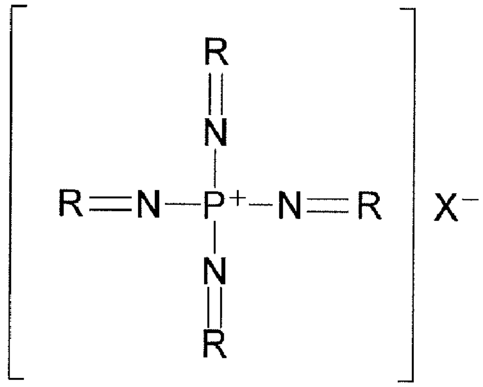

(1)

(wherein, -N=R represents the following partial structural formula (A) or the following partial structural formula (B), and $X^-$ represents an anion.)

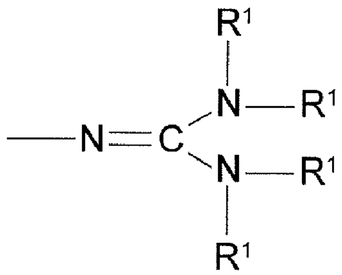

(A)

(wherein, $R^1$s are the same or different from each other, represent a hydrogen atom or a hydrocarbon group having a carbon number of 1 to 20, and may be bonded to each other to form a ring structure.)

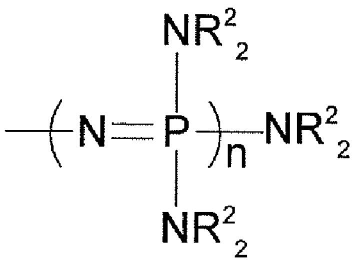

(B)

(wherein, $R^2$s are the same or different from each other and represent a hydrogen atom or a hydrocarbon group having a carbon number of 1 to 20. $R^2$s may be bonded to each other to form a ring structure. "n" represents an integral number of 0 to 3. "n" corresponding to at least one R of the four Rs in the formula (1) is not 0.)

The present invention [5] includes a resin premix used in the method for producing a polyurethane foam described in the above-described [4] containing a polyol and a compound represented by the following formula (1).

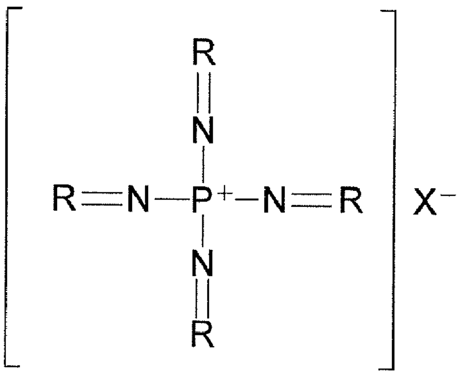

(1)

(wherein, -N=R represents the following partial structural formula (A) or the following partial structural formula (B), and $X^-$ represents an anion.)

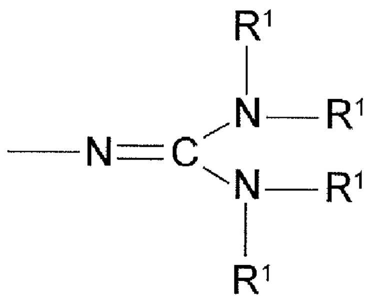

(A)

(wherein, $R^1$s are the same or different from each other, represent a hydrogen atom or a hydrocarbon group having a carbon number of 1 to 20, and may be bonded to each other to form a ring structure.)

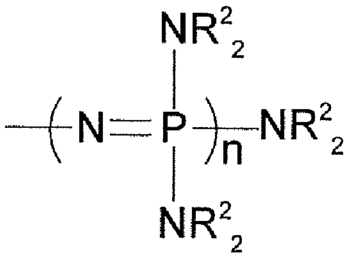

(B)

(wherein, $R^2$s are the same or different from each other and represent a hydrogen atom or a hydrocarbon group having a carbon number of 1 to 20. $R^2$s may be bonded to each other to form a ring structure. "n" represents an integral number of 0 to 3. "n" corresponding to at least one R of the four Rs in the formula (1) is not 0.)

EFFECT OF THE INVENTION

In the method for reducing a volatile organic compound (VOC) of the present invention, the compound represented by the above-described formula (1) is contained in the polyurethane foam, so that the volatile organic compound (VOC) can be efficiently reduced, and a degree of reduction of the volatile organic compound (VOC) can be arbitrarily adjusted in accordance with the amount of the compound represented by the above-described formula (1).

According to the method for producing a polyurethane foam and the resin premix of the present invention, the polyurethane foam having the volatile organic compound (VOC) reduced at an arbitrary degree can be produced.

BRIEF DESCRIPTION OF THE DRAWINGS

FIG. 1 shows a correlation diagram illustrating a relationship between a content ratio of a cation portion of a VOC reducing agent and a reduction amount of an acetaldehyde.

FIG. 2 shows a correlation diagram illustrating a relationship between a content ratio of a cation portion of a VOC reducing agent and a reduction amount of a propionaldehyde.

FIG. 3 shows a correlation diagram illustrating a relationship between a used amount of ADH (hydrazide antioxidant), and a reduction amount of an acetaldehyde and a reduction amount of a propionaldehyde.

FIG. 4 shows a correlation diagram illustrating a relationship between a used amount of VDH (hydrazide antioxidant), and a reduction amount of an acetaldehyde and a reduction amount of a propionaldehyde.

DESCRIPTION OF EMBODIMENTS

A polyurethane foam (for example, flexible polyurethane foam) contains a volatile organic compound (VOC). In other words, the polyurethane foam is a VOC-containing foam (foam composition) that contains a polyurethane foam and a volatile organic compound.

The volatile organic compound (VOC) is an organic compound having a vapor pressure at 20°C of 2500 Pa or less, preferably 150 Pa or less.

Examples of the volatile organic compound (VOC) include aldehyde compounds such as acetaldehyde, formaldehyde, and propionaldehyde; aromatic organic compounds such as styrene, toluene, and benzene; ester compounds such as ethyl acetate and butyl acetate; alcohol compounds such as methanol, ethanol, isopropanol, and butanol; ketone compounds such as acetone and methyl ethyl ketone; aliphatic cyclic compounds such as cyclohexane and cyclopentane; phthalate ester compounds such as di-n-butyl phthalate and n-ethylhexyl phthalate; nitrile compounds such as acetonitrile; fluorine-containing organic compounds; and chlorine-containing organic compounds such as chloroform, methylene chloride, vinyl chloride, ethylbenzene, p-dichlorobenzene, and o-dichlorobenzene.

Preferably, the volatile organic compound (VOC) is at least one kind selected from the group consisting of aldehyde compounds selected from acetaldehyde, formaldehyde, and propionaldehyde; aromatic organic compounds selected from styrene, toluene, and benzene; ester compounds selected from ethyl acetate and butyl acetate; alcohol compounds selected from methanol, ethanol, isopropanol, and butanol; ketone compounds selected from acetone and methyl ethyl ketone; aliphatic cyclic compounds selected from cyclohexane and cyclopentane; phthalate ester compounds selected from di-n-butyl phthalate and n-ethylhexyl phthalate; nitrile compounds selected from acetonitrile; fluorine-containing organic compounds; and chlorine-containing organic compounds selected from chloroform, methylene chloride, vinyl chloride, ethylbenzene, p-dichlorobenzene, and o-dichlorobenzene.

More preferably, the volatile organic compound (VOC) is at least one kind selected from acetaldehyde, formaldehyde, and propionaldehyde, further more preferably, the volatile organic compound (VOC) is at least one kind selected from the group consisting of acetaldehyde and propionaldehyde.

One or two or more volatile organic compounds (VOC) may be contained in the polyurethane foam.

In a method for reducing a volatile organic compound (VOC) of the present invention, the volatile organic compound (VOC) in the polyurethane foam is reduced. To be more specific, in this method, a compound represented by the following formula (1) (hereinafter, referred to as a VOC reducing agent) is contained in the polyurethane foam so as to reduce the volatile organic compound (VOC).

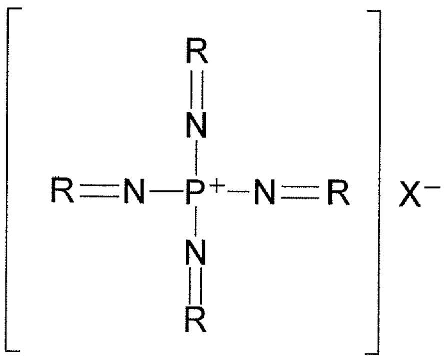

(1)

(wherein, -N=R represents the following partial structural formula (A) or the following partial structural formula (B), and $X^-$ represents an anion.)

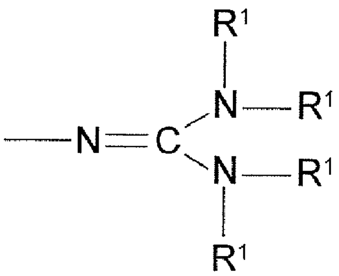

(A)

(wherein, $R^1$s are the same or different from each other, represent a hydrogen atom or a hydrocarbon group having a carbon number of 1 to 20, and may be bonded to each other to form a ring structure.)

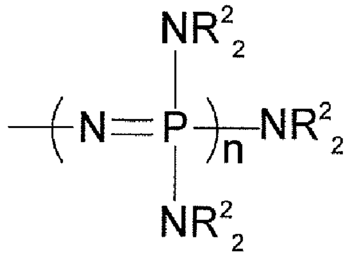

(B)

(wherein, $R^2$s are the same or different from each other and represent a hydrogen atom or a hydrocarbon group having a carbon number of 1 to 20. $R^2$s may be bonded to each other to form a ring structure. "n" represents an integral number of 0 to 3. "n" corresponding to at least one R of the four Rs is not 0.)

In the above-described formula (1), when R is represented by the partial structural formula (A), the VOC reducing agent is a compound represented by the following formula (2).

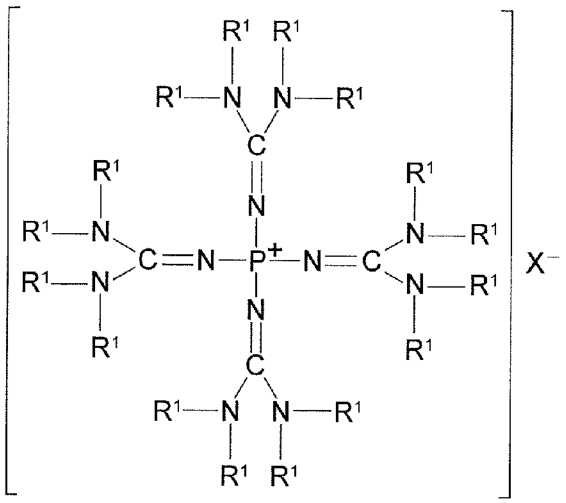

(2)

(wherein, $R^1$ represents the same as $R^1$ of the above-described formula (A), and $X^-$ represents the same as $X^-$ of the above-described formula (1).)

In the above-described partial structural formula (A) and formula (2), $R^1$s are the same or different from each other and represent a hydrogen atom or a hydrocarbon group having a carbon number of 1 to 20.

Examples of the hydrocarbon group having a carbon number of 1 to 20 include aliphatic hydrocarbon groups having a carbon number of 1 to 20, aryl groups having a carbon number of 6 to 20 that may have a substituent, and aralkyl groups having a carbon number of 7 to 20 that may have a substituent. Preferably, an aliphatic hydrocarbon group having a carbon number of 1 to 20 is used.

Examples of the aliphatic hydrocarbon group having a carbon number of 1 to 20 include chain saturated aliphatic hydrocarbon groups having a carbon number of 1 to 20 such as methyl group, ethyl group, n-propyl group, isopropyl group, n-butyl group, sec-butyl group, tert-butyl group, 2-butyl group, 1-pentyl group, 2-pentyl group, 3-pentyl group, 2-methyl-1-butyl group, isopentyl group, tert-pentyl group, 3-methyl-2-butyl group, neopentyl group, n-hexyl group, 4-methyl-2-pentyl group, 1-heptyl group, 3-heptyl group, 1-octyl group, 2-octyl group, 2-ethyl-1-hexyl group, 1,1-dimethyl-3,3-dimethylbutyl group, 1-nonyl group, 1-decyl group, undecyl group, dodecyl group, tridecyl group, tetradecyl group, pentadecyl group, hexadecyl group, heptadecyl group, octadecyl group, and nonadecyl group; cyclic saturated aliphatic hydrocarbon groups having a carbon number of 1 to 20 such as cyclopropyl group, cyclobutyl group, cyclopentyl group, cyclohexyl group, cycloheptyl group, cyclooctyl group, cyclononyl group, and cyclodecyl group; chain unsaturated aliphatic hydrocarbon groups having a carbon number of 2 to 20 such as vinyl group and 2-propenyl group; and cyclic unsaturated aliphatic hydrocarbon groups having a carbon number of 3 to 20 such as cyclohexenyl group. Preferably, a chain saturated aliphatic hydrocarbon group having a carbon number of 1 to 20 is used, more preferably, a methyl group, an ethyl group, an n-propyl group, an isopropyl group, a tert-butyl group, a tert-pentyl group, and a 1,1-dimethyl-3,3-dimethylbutyl group are used, further more preferably, a methyl group is used.

Examples of the aryl group having a carbon number of 6 to 20 of the aryl group having a carbon number of 6 to 20 that may have a substituent include phenyl group, 2-tolyl group, 3-tolyl group, 4-tolyl group, 2,3-xylyl group, 2,4-xylyl group, 2,5-xylyl group, 2,6-xylyl group, 3,4-xylyl group, 3,5-xylyl group, 2,3,4-trimethylphenyl group, 3,4,5-trimethylphenyl group, 2,4,6-trimethylphenyl group, 2,3,4,5-tetramethylphenyl group, 2,3,4,6-tetramethylphenyl group, 2-ethylphenyl group, 3-ethylphenyl group, 4-ethylpheyl group, 1-naphthyl group, and 2-naphthyl group.

Examples of the substituent of the aryl group having a carbon number of 6 to 20 that may have a substituent include hydroxyl group, halogeno group (for example, chloro group, fluoro group, bromo group, iodine group, or the like), cyano group, amino group, carboxy group, alkoxy group (for example, alkoxy group having a carbon number of 1 to 6 such as methoxy, ethoxy, propoxy, isopropoxy, butoxy, isobutoxy, sec-butoxy, tert-butoxy, pentyloxy, isopentyloxy, neopentyloxy, hexyloxy, or the like), aryloxy group (for example, phenoxy group or the like), alkoxycarbonyl group (for example, alkoxycarbonyl group having a carbon number of 1 to 6 such as methoxycarbonyl ethoxycarbonyl, propoxycarbonyl, isopropoxycarbonyl, butoxycarbonyl, isobutoxycarbonyl, sec-butoxycarbonyl, tert-butoxycarbonyl, pentyloxycarbonyl, isopentyloxycarbonyl, neopentyloxycarbonyl, hexyloxycarbonyl or the like), alkylthio group (for example, alkylthio group having a carbon number of 1 to 4 such as methylthio, ethylthio, propylthio, butylthio, or the like), and arylthio group (for example, phenylthio group or the like). The site of substitution and the number of substitution of the substituent can be arbitrarily determined.

Examples of the aralkyl group having a carbon number of 7 to 20 of the aralkyl group having a carbon number of 7 to 20 that may have a substituent include benzyl group, 1-phenylethyl group, 2-phenylethyl group, 1-phenylpropyl, 2-phenylpropyl, 3-phenylpropyl, o-methylbenzyl, m-methylbenzyl, p-methylbenzyl, o-ethylbenzyl, m-ethylbenzyl, p-ethylbenzyl, o-isopropylbenzyl, m-isopropylbenzyl, p-isopropylbenzyl, 2,3,4-trimethylbenzyl, 3,4,5-trimethylbenzyl, and 2,4,6-trimethylbenzyl.

An example of the substituent of the aralkyl group having a carbon number of 7 to 20 that may have a substituent includes the above-described substituent of the aryl group having a carbon number of 6 to 20 that may have a substituent.

$R^1$s may be bonded to each other to form a ring structure. Preferably, $R^1$s that are bonded to the same guanidine structure are bonded to each other to form a ring structure.

When $R^1$s form a ring structure, examples of $R^1$ include alkylene groups having a carbon number of 2 to 20 such as dimethylene group, trimethylene group, tetramethylene group, pentamethylene group, and hexamethylene group; cycloalkylene groups having a carbon number of 3 to 20 such as cyclohexylene group; alkenylene groups having a carbon number of 2 to 20 such as vinylene group; cycloalkenylene groups having a carbon number of 3 to 20 such as cyclohexenylene group; arylene groups having a carbon number of 6 to 20 such as phenylene group and naphthylene group; and aralkylene groups having a carbon number of 8 to 20 such as phenylethylene group. Preferably, an alkylene group having a carbon number of 2 to 20 is used. More preferably, a dimethylene group, a trimethylene group, a tetramethylene group, and a pentamethylene group are used, further more preferably, a tetramethylene group is used.

Examples of the ring structure in which $R^1$s are bonded to each other include pyrrolidinyl group, pyrrolyl group, piperidinyl group, indolyl group, and isoindolyl group.

Preferably, $R^1$s are the same.

As $R^1$, preferably, an aliphatic hydrocarbon group having a carbon number of 1 to 20 is used, more preferably, a chain aliphatic hydrocarbon group having a carbon number of 1 to 20 is used, further more preferably, a methyl group, an ethyl group, an n-propyl group, and an isopropyl group are used, particularly preferably, a methyl group is used.

In the above-described formula (1), $X^-$ represents an anion, preferably represents a hydroxy anion (hydroxide ion), an alkoxy anion (alkoxide), a carboxy anion, a sulfonyl anion, a hydrogencarbonate anion, and a halide ion.

Examples of the alkoxy anion include methoxide, ethoxide, n-propoxide, isopropoxide, n-butoxide, sec-butoxide, tert-butoxide, cyclohexoxide, 2-heptoxide, 1-octoxide, and phenoxide.

Examples of the carboxy anion include anion formate, anion acetate, anion propionate, anion butyrate, anion isobutyrate, anion caproate, anion laurate, anion palmitate, anion stearate, anion benzoate, decyl benzoate, anion dodecyl benzoate, anion lactate, anion malate, anion tartrate, anion citrate, and anion ricinolate.

Examples of the sulfonyl anion include p-toluenesulfonic acid anion, dodecylbenzenesulfonic acid anion (including straight chain and branched), benzenesulfonic acid anion, methanesulfonic acid anion, and camphorsulfonic acid anion.

Examples of the halide ion include fluoride ion, chloride ion, bromide ion, and iodide ion. Preferably, a chloride ion is used.

As $X^-$, more preferably, a sulfonyl anion, a hydroxy anion, and a halide ion are used, further more preferably, a sulfonyl anion and a halide ion are used.

To be specific, examples of the compound represented by the above-described formula (2) include tetrakis(1,1,3,3-tetramethylguanidino)phosphonium chloride, tetrakis(1,1,3,3-tetramethylguanidino)phosphonium hydroxide, tetrakis(1,3-diisopropylimidazolidineimino)phosphonium chloride, and tetrakis(1,3-dimethylimidazolidineimino)phosphonium chloride. Preferably, a tetrakis(1,1,3,3-tetramethylguanidino)phosphonium chloride and a tetrakis(1,1,3,3-tetramethylguanidino)phosphonium hydroxide are used, more preferably, a tetrakis(1,1,3,3-tetramethylguanidino)phosphonium chloride is used.

These compounds represented by the above-described formula (2) can be used alone or in combination of two

or more.

The compound represented by the above-described formula (2) can be, for example, produced by the method for producing a phosphonium salt described in German Published Patent Application DE 102006010034A1.

In the above-described formula (1), when R is represented by the partial structural formula (B), the VOC reducing agent is, for example, a compound represented by the following formula (3).

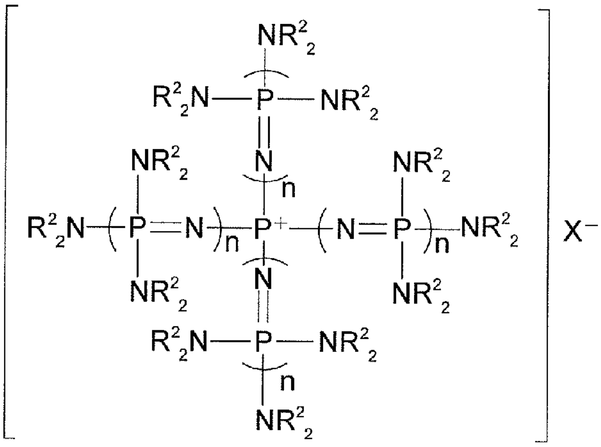

(3)

(wherein, $R^2$ represents the same as $R^2$ of the above-described formula (B), $X^-$ represents the same as $X^-$ of the above-described formula (1), and "n"s are the same or different from each other and represent the same as "n" of the above-described formula (B).)

In the above-described partial structural formula (B) and the above-described formula (3), $R^2$s are the same or different from each other and represent a hydrogen atom or a hydrocarbon group having a carbon number of 1 to 20.

An example of the hydrocarbon group having a carbon number of 1 to 20 includes the above-described hydrocarbon group having a carbon number of 1 to 20.

$R^2$s may be the same or different from each other, and bonded to each other to form a ring structure. Preferably, $R^2$s that are directly bonded to the same nitrogen are bonded to each other to form a ring structure.

When $R^2$s form a ring structure, examples of $R^2$ include dimethylene group, trimethylene group, tetramethylene group, pentamethylene group, and hexamethylene group. Preferably, a dimethylene group, a trimethylene group, and a tetramethylene group are used.

Preferably, $R^2$s are the same.

As $R^2$, preferably, an aliphatic hydrocarbon group having a carbon number of 1 to 20 is used, more preferably, a chain aliphatic hydrocarbon group having a carbon number of 1 to 20 is used, further more preferably, a methyl group, an ethyl group, an n-propyl group, and an isopropyl group are used, particularly preferably, a methyl group is used.

In the above-described partial structural formula (B) and the above-described formula (3), "n"s are the same or different from each other and represent an integral number of 0 to 3; preferably, "n"s are the same or different from each other and represent an integral number of 1 or 2; more preferably, at least three "n"s of the above-described formula (3) represent an integral number of 1 and the rest represent an integral number of 2; further more preferably, all of "n"s in the above-described formula (3) represent an integral number of 1.

To be specific, examples of the compound represented by the above-described formula (3) include tetrakis[tris(dimethylamino)phosphoranylideneamino]phosphonium hydroxide, tetrakis[tris(dimethylamino)phosphoranylideneamino]phosphonium chloride, tetrakis[tris(diethylamino)phosphoranylideneamino]phosphonium chloride, tetrakis[tris(1-azocyclononyl)phosphoranylideneamino]phosphonium chloride, tetrakis[tris(dimethylamino)phosphoranylideneamino]phosphonium bromide, and tetrakis[tris(dimethylamino)phosphoranylideneamino]phosphonium dodecylbenzenesulfonyl. More preferably, a tetrakis[tris(dimethylamino)phosphoranylideneamino]phosphonium chloride and a tetrakis[tris(dimethylamino)phosphoranylideneamino]phosphonium dodecylbenzenesulfonyl are used.

These compounds represented by the above-described formula (3) can be used alone or in combination of two or more.

The compound represented by the above-described formula (3) can be, for example, synthesized by the method for synthesizing a phosphazenium compound described in Pages 12 to 13 of European Published Patent Application EP 0791600A1 or a similar method thereof.

These VOC reducing agents can be used alone or in combination of two or more.

As the VOC reducing agent, preferably, a compound represented by the above-described formula (3) is used, more preferably, a tetrakis[tris(dimethylamino)phosphoranylideneamino]phosphonium dodecylbenzenesulfonyl (a compound in which in the above-described formula (3), $R^2$ is a methyl group and $X^-$ is a straight-chain dodecylbenzene sulfonic acid anion) is used.

According to the VOC reducing agent, the volatile organic compound (VOC) can be efficiently reduced, and the polyurethane foam having a degree of reduction arbitrarily adjusted can be obtained.

To allow the polyurethane foam to contain the VOC reducing agent, at the time of the production of the polyurethane foam, the VOC reducing agent is contained in the resin premix to allow the resin premix to react with the polyisocyanate (described later) and eventually also in the polyisocyanate.

A method for allowing the resin premix to contain the VOC reducing agent is not particularly limited, and for example, at the time of the production of a polyol (described later), the VOC reducing agent is used as an addition polymerization catalyst And either, after preparing the polyol without using the VOC reducing agent, the VOC reducing agent is added to the polyol, so that the resin premix containing the VOC reducing agent can be prepared. Or, if at the time of the production of the polyol (described later), the VOC reducing agent is used as an addition polymerization catalyst, the VOC reducing agent is further added to the obtained polyol (including the VOC reducing agent).

To be more specific, in this method, first, the resin premix containing the polyol and the polyisocyanate are prepared (preparing step).

The resin premix contains, for example, the polyol, a urethane-formation catalyst, and a blowing agent.

The polyol preferably contains a macropolyol.

The macropolyol is a high molecular weight polyol having a number average molecular weight of 400 or more and 10000 or less (including a high molecular weight polyol in which polymer fine particles are dispersed), and examples thereof include polyether polyol, polyester polyol, polyesteramide polyol, polycarbonate polyol, polyurethane polyol, epoxy polyol, plant oil polyol, polyolefin polyol, acrylic polyol, and polymer polyol (vinyl monomer-modified polyol). These macropolyols can be used alone or in combination of two or more.

As the macropolyol, preferably, a polyether polyol and a polymer polyol are used. The macropolyol further more preferably contains a polyether polyol and a polymer polyol.

The number average molecular weight is measured by gel permeation chromatography (GPC) analysis (calibrated with polyethylene glycol) in conformity with JIS K 7252-1 (2008) (hereinafter, the same).

An example of the polyether polyol includes a polyoxyalkylene polyol.

An example of the polyoxyalkylene polyol includes an addition polymer (including a random and/or block copolymer of two or more alkylene oxides) of an alkylene oxide with a low molecular weight polyol or a low molecular weight polyamine as an initiator under the presence of an addition polymerization catalyst such as alkali metal hydroxide (sodium hydroxide, potassium hydroxide, or the like).

In the polyoxyalkylene polyol, as described above, when the alkali metal hydroxide is used as the addition polymerization catalyst, a polyoxyalkylene polyol without containing the VOC reducing agent (accordingly, the resin premix without containing the VOC reducing agent) is obtained, and as described later, when the VOC reducing agent is used as the addition polymerization catalyst, a polyoxyalkylene polyol containing the VOC reducing agent (accordingly, the resin premix containing the VOC reducing agent) is obtained.

The low molecular weight polyol is a compound having two or more hydroxyl groups and having a molecular weight of 40 or more and below 400. Examples thereof include dihydric alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, alkane (C7 to C20) diol, 1,3- or 1,4-cyclohexanedimethanol and a mixture thereof, 1,3- or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerine, trimethylol propane, and triisopropanolamine; tetrahydric alcohols such as tetramethylolmethane (pentaerythritol) and diglycerine; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

These low molecular weight polyols can be used alone or in combination of two or more.

The low molecular weight polyamine is a compound having two or more amino groups and having a molecular weight of 40 or more and below 400. Examples thereof include low molecular weight diamines such as ethyl enediamine, 1,3-propanediamine, 1,3-, or 1,4-butanediamine, 1,6-hexamethylenediamine, 1,4-cyclohexanediamine, 3 -aminomethyl-3, 5, 5 -trimethylcyclohexylamine (isophorodiamine), 4,4'-dicyclohexylmethanediamine, 2,5 (2,6)-bis(aminomethyl)bicyclo[2.2.1]heptane, 1,3-bis(aminomethyl)cyclohexane, hydrazine, and o-, m-, or p-tolylenediamine (TDA, OTD); low molecular weight triamines such as diethylenetriamine; and low molecular weight polyamines having four or more amino groups such as triethylenetetramine and tetraethylenepentamine.

These low molecular weight polyamines can be used alone or in combination of two or more.

Examples of the alkylene oxide include alkylene oxides having a carbon number of 2 to 12 such as ethylene oxide, propylene oxide, 1,2-butylene oxide, 2,3-butylene oxide, styrene oxide, cyclohexene oxide, epichlorohydrin, epibromohydrin, methylglycidyl ether, allylglycidyl ether, and phenylglycidyl ether.

These alkylene oxides can be used alone or in combination of two or more.

As the alkylene oxide, preferably, an ethylene oxide, a propylene oxide, a, 1,2-butylene oxide, and a styrene oxide are used, more preferably, an ethylene oxide and a propylene oxide are used.

As the polyoxyalkylene polyol, preferably, a polyethylene glycol, a polypropylene glycol, and a propylene oxide-ethylene oxide copolymer (random and/or block copolymer) are used.

When the propylene oxide-ethylene oxide copolymer is used as the polyoxyalkylene polyol, the ethylene oxide content is, for example, 5 mass% or more, preferably 10 mass% or more, and for example, 50 mass% or less, preferably 30 mass% or less.

The ethylene oxide content is calculated from the charged mixing formulation (hereinafter, the same).

When the propylene oxide-ethylene oxide copolymer is used as the polyoxyalkylene polyol, the terminated oxyethylene group content is, for example, 5 mass% or more, preferably 10 mass% or more, and for example, 50 mass% or less, preferably 30 mass% or less.

The terminated oxyethylene group content is calculated from the charged mixing formulation.

The polyoxyalkylene polyol has a number average molecular weight of, for example, 400 or more, preferably 1000 or more, and for example, 15000 or less, preferably 10000 or less.

The polyoxyalkylene polyol has an average functionality of, for example, 1.5 or more, preferably 2.0 or more, more preferably 2.5 or more, and for example, 6 or less, preferably 4 or less.

The average functionality of the polyoxyalkylene polyol is calculated from the charged mixing formulation.

The polyoxyalkylene polyol has a hydroxyl value of, for example, 10 mgKOH/g or more, preferably 15 mgKOH/g or more, more preferably 20 mgKOH/g or more, further more preferably 25 mgKOH/g or more, and for example, 80 mgKOH/g or less, preferably 60 mgKOH/g or less, more preferably 50 mgKOH/g or less, further more preferably 30 mgKOH/g or less.

When the hydroxyl value of the polyoxyalkylene polyol is within the above-described range, the polyurethane foam obtained by using the polyol containing the polyoxyalkylene polyol can retain the properties such as hardness.

The hydroxyl value is measured in conformity with the description of JIS K-1557-1 (2007) (hereinafter, the same).

These polyoxyalkylene polyols can be used alone or in combination of two or more.

The polymer polyol (vinyl monomer-modified polyol) can be obtained by dispersion polymerization of the vinyl monomer in the high molecular weight polyol.

In the polymer polyol, the high molecular weight polyol is a dispersion medium of the vinyl monomer, and has a number average molecular weight of, for example, 400 or more, preferably 1000 or more, and for example, 10000 or less, preferably 8000 or less. Examples of the high molecular weight polyol include polyether polyol, polyester polyol, and polycarbonate polyol. Preferably, a polyether polyol is used.

These high molecular weight polyols can be used alone or in combination of two or more.

Examples of the vinyl monomer include styrene, acrylamide, alkyl (meth)acrylate, vinyl cyanide (acrylonitrile), and vinylidene cyanide. These vinyl monomers can be used alone or in combination of two or more. Of these, preferably, a styrene, a vinyl cyanide (acrylonitrile), and a combination of a styrene and a vinyl cyanide are used.

The polymer content of the vinyl monomer with respect to the polymer polyol is, for example, 2 mass% or more, preferably 5 mass% or more, and for example, 50 mass% or less, preferably 45 mass% or less.

The polymer polyol can be obtained by allowing the vinyl monomer to react under the presence of, for example, a radical polymerization initiator (for example, persulfate, organic peroxide, azo-based compound (azobisisobutyronitrile or the like), or the like), furthermore, if necessary, a dispersion stabilizer, a chain transfer agent, or the like in the high molecular weight polyol.

To be more specific, the polymer polyol is prepared by polymerizing the above-described vinyl monomer with a radical initiator in the high molecular weight polyol and dispersing the obtained polymer fine particles in the high molecular weight polyol.

The polymer fine particles are the polymer fine particles prepared from the polymer of the vinyl monomer.

In the polymer fine particles, at least a part of the vinyl monomer can be also grafted to the high molecular weight polyol at the time of the polymerization.

The polymer polyol has a number average molecular weight of, for example, 400 or more, preferably 1000 or more, and for example, 15000 or less, preferably 10000 or less.

The polymer polyol has an average functionality of, for example, 1.5 or more, preferably 2.0 or more, more preferably 2.5 or more, and for example, 6 or less, preferably 4 or less.

The average functionality of the polymer polyol is calculated from the charged mixing formulation.

The polymer polyol has a hydroxyl value of, for example, 10 mgKOH/g or more, preferably 15 mgKOH/g or more, more preferably 20 mgKOH/g or more, further more preferably 25 mgKOH/g or more, and for example, 80 mgKOH/g or less, preferably 60 mgKOH/g or less, more preferably 50 mgKOH/g or less, further more preferably 30 mgKOH/g or less.

When the hydroxyl value of the polymer polyol is within the above-described range, the polyurethane foam obtained by using the polyol containing the polymer polyol can retain the properties such as hardness.

These polymer polyols can be used alone or in combination of two or more.

When the macropolyol contains the polyoxyalkylene polyol and the polymer polyol, as the mixing ratio of the polyoxyalkylene polyol to the polymer polyol, the ratio of the polyoxyalkylene polyol with respect to 100 parts by mass of the macropolyol is, for example, 10 parts by mass or more, preferably 30 parts by mass or more, more preferably 40 parts by mass or more, and for example, 90 parts by mass or less, preferably 70 parts by mass or less, more preferably 60 parts by mass or less. The ratio of the polymer polyol with respect to 100 parts by mass of the macropolyol is, for example, 10 parts by mass or more, preferably 30 parts by mass or more, more preferably 40 parts by mass or more, and for example, 90 parts by mass or less, preferably 70 parts by mass or less, more preferably 60 parts by mass or less.

The mixing proportion of the polyoxyalkylene polyol to the polymer polyol based on the mass is, for example, 10/90 or more, preferably 30/70 or more, more preferably 40/60 or more, and for example, 90/10 or less, preferably 70/30 or less, more preferably 60/40 or less.

When the mixing ratio and the mixing proportion of the polyoxyalkylene polyol to the polymer polyol in the macropolyol are within the above-described range, the polyurethane foam obtained by using the polyol containing the macropolyol can retain the properties such as hardness.

The macropolyol has a hydroxyl value of, for example, 10 mgKOH/g or more, preferably 15 mgKOH/g or more, more preferably 20 mgKOH/g or more, further more preferably 25 mgKOH/g or more, and for example, 80 mgKOH/g or less, preferably 60 mgKOH/g or less, more preferably 50 mgKOH/g or less, further more preferably 30 mgKOH/g or less.

When the hydroxyl value of the macropolyol is within the above-described range, the polyurethane foam obtained by using the polyol containing the macropolyol can retain the properties such as hardness.

The macropolyol has an average functionality of, for example, 1.5 or more, preferably 2 or more, more preferably 2.5 or more, and for example, 6 or less, preferably 4 or less.

The polyol can contain the above-described low molecular weight polyol in addition to the above-described macropolyaol. When the polyol contains the low molecular weight polyol, the content ratio thereof is appropriately set in accordance with its purpose and use as long as it does not damage the excellent effect of the present invention. Preferably, the polyol does not contain the low molecular weight polyol.

The content ratio of the polyol in the resin premix with respect to the total amount of the resin premix is, for example, 98.00 mass% or more, preferably 99.70 mass% or more, more preferably 99.80 mass% or more, further more preferably 99.90 mass% or more, and for example, below 100 mass%, preferably 99.999 mass% or less, more preferably 99.99 mass% or less, further more preferably 99.98 mass% or less.

The urethane-formation catalyst is not particularly limited, and a known urethane-formation catalyst can be used. To be specific, examples thereof include aliphatic amines such as triethylamine, triethylenediamine, bis-(2-dimethylaminoethyl)ether, and morpholines (for example, N-methylmorpholine or the like); quaternary ammonium salts such as tetraethylammonium hydroxide; imidazoles such as imidazole, 2-ethyl-4-methylimidazole, and 1-isobutyl-2-methylimidazole; organic tin compounds such as tin octanoate (tin octylate), tin acetate, tin oleate, tin laurate, dibutyl tin diacetate, dimethyl tin dilaulate, dibutyl tin dimercaptide, dibutyl tin maleate, dibutyl tin dilaurate (dibutyl tin dilaulate), dibutyl tin dineodecanoate, dioctyl tin dimercaptide, dioctyl tin dilaurate, and dibutyl tin dichloride; organic lead compounds such as lead octanoate and lead naphthenate; organic nickel compounds such as nickel naphthenate; organic cobalt compounds such as cobalt naphthenate; organic copper compounds such as copper octenate; and organic bismuth compounds such as bismuth octylate and bismuth neodecanoate.

Furthermore, examples of the urethane-formation catalyst include potassium salts such as potassium carbonate, potassium acetate, and potassium octylate.

The urethane-formation catalyst can be available as a commercially available product. Examples thereof include KAOLIZER No. 31 (amine catalyst, manufactured by Kao Corporation), KAOLIZER No. 120 (amine catalyst, 1-isobutyl-2-methylimidazole, manufactured by Kao Corporation), KAOLIZER No. 12 (amine catalyst, manufactured by Kao Corporation), KAOLIZER No. 25 (amine catalyst, manufactured by Kao Corporation), DABCO 33LV (amine catalyst, diethylene glycol solution with a concentration of 33 mass% triethylenediamine, manufactured by Air Products Japan K.K.), Niax A-1 (amine catalyst, manufactured by Momentive Performance Materials Inc. (hereinafter, referred to as "manufactured by Momentive")), TOYOCAT-NCE (amine catalyst, manufactured by TOSOH CORPORATION), NEOSTANN U-100 (organic tin catalyst, dibutyl tin dilaurate, manufactured by NITTO KASEI CO., LTD.), and FORMATE TK-1 (organic tin catalyst, manufactured by Mitsui Chemicals, Inc.).

These urethane-formation catalysts can be used alone or in combination of two or more.

The mixing ratio of the urethane-formation catalyst with respect to 100 parts by mass of the polyol (preferably, macropolyol) in the resin premix is, for example, 0.1 parts by mass or more, preferably 0.3 parts by mass or more, and for example, 5 parts by mass or less, preferably 1 part by mass or less.

The blowing agent is not particularly limited, and a known blowing agent is used. Preferably, water is used.

As the blowing agent, the water and a physical blowing agent (for example, hydrofluorocarbons, hydrocarbons (for example, cyclopentane or the like), carbon dioxide gas, liquefied carbon dioxide gas, or the like) can be used in combination at an appropriate ratio. As the physical blowing agent, in view of reduction of environmental load, preferably,

a carbonic acid gas and a liquefied carbonic acid gas are used.

These physical blowing agents can be used alone or in combination of two or more.

The mixing ratio of the blowing agent with respect to 100 parts by mass of the polyol (preferably, macropolyol) in the resin premix is, for example, 0.5 parts by mass or more, preferably 1 part by mass or more, and for example, 10 parts by mass or less, preferably 7 parts by mass or less.

When the content ratio of the blowing agent is within the above-described range, excellent foaming properties can be obtained.

The resin premix can contain an additive such as cross-linking agent, interconnecting agent, and foam stabilizer as needed. Preferably, the resin premix contains an additive.

The cross-linking agent is not particularly limited, and a known cross-linking agent is used. To be specific, examples thereof include alkanolamine, trihydric or more polyol, and alkylene oxide addition polyol.

Examples of the alkanolamine include polyalkanolamines such as trialkanolamine (tri-C2 to C4 alkanolamine) including trimethanolamine, triethanolamine, tripropanolamine, triisopropanolamine, and tributanolamine and dialkanolamine (di-C2 to C4 alkanolamine) including diethanolamine. Preferably, a diethanolamine is used.

Examples of the trihydric or more polyol include trihydric alcohols such as glycerine and trimethylolpropane and polyhydric alcohols having four or more hydroxyl groups such as tetramethylolmethane, pentaerythritol, dipentaerythritol, D-sorbitol, xylitol, D-mannitol, and D-mannite.

The alkylene oxide addition polyol is a polyol in which an alkylene oxide is added to the above-described trihydric or more polyol, and an example thereof includes a polyoxyalkylene polyol having a hydroxyl value of 200 mgKOH/g or more and 2000 mgKOH/g or less.

As the cross-linking agent, preferably, a trihydric or more polyol and/or an alkylene oxide addition polyol are used.

As the trihydric or more polyol, preferably, a glycerine is used. As the alkylene oxide addition polyol, preferably, ACTCOL KL-210 (polyoxyalkylene polyol having an average functionality of 3.75, hydroxyl value (OHV) = 840 mgKOH/g, manufactured by Mitsui Chemicals, Inc.) is used.

The cross-linking agent has a hydroxyl value of, for example, 200 mgKOH/g or more, preferably 800 mgKOH/g or more, and for example, 2000 mgKOH/g or less, preferably 1850 mgKOH/g or less.

These cross-linking agents can be used alone or in combination of two or more.

The mixing ratio of the cross-linking agent with respect to 100 parts by mass of the polyol (preferably, macropolyol) in the resin premix is, for example, 0.5 parts by mass or more, preferably 1 part by mass or more, and for example, 10 parts by mass or less, preferably 5 parts by mass or less.

The interconnecting agent is not particularly limited, and a known interconnecting agent is used. To be specific, an example thereof includes a polyether polyol (for example, random copolymer of propylene oxide-ethylene oxide).

When the propylene oxide-ethylene oxide copolymer is used as the interconnecting agent, the ethylene oxide content is, for example, above 50 mass%, preferably 60 mass% or more, and for example, 90 mass% or less, preferably 80 mass% or less.

The interconnecting agent can be available as a commercially available product. Examples thereof include ACTCOL EP-505S (manufactured by Mitsui Chemicals, Inc.), MF-19 (manufactured by Mitsui Chemicals, Inc.), EXCENOL 3040 (manufactured by Asahi Glass Co., Ltd.), and EL-985 (manufactured by Asahi Glass Co., Ltd.).

These interconnecting agents can be used alone or in combination of two or more.

The mixing ratio of the interconnecting agent with respect to 100 parts by mass of the polyol (preferably, macropolyol) in the resin premix is, for example, 0.1 parts by mass or more, preferably 0.5 parts by mass or more, and for example, 10 parts by mass or less, preferably 5 parts by mass or less.

The foam stabilizer is not particularly limited, and a known foam stabilizer is used. An example thereof includes a silicone foam stabilizer.

The foam stabilizer can be available as a commercially available product. Examples thereof include DC-6070 (manufactured by Air Products Japan K.K.), DC-2525 (manufactured by Air Products Japan K.K.), B-8715LF2 (manufactured by EVONIK), SZ-1966 (manufactured by Dow Corning Toray Co., Ltd.), SRX-274C, SF-2969, SF-2961, SF-2962, L-5309 (manufactured by Momentive), L-3601 (manufactured by Dow Corning Toray Co., Ltd.), L-5307, L-3600, L-5366, SZ-1325, SZ-1328, and Y-10366 (manufactured by Momentive).

These foam stabilizers can be used alone or in combination of two or more.

The mixing ratio of the foam stabilizer with respect to 100 parts by mass of the polyol (preferably, macropolyol) in the resin premix is, for example, 0.1 parts by mass or more, preferably 0.5 parts by mass or more, and for example, 10 parts by mass or less, preferably 5 parts by mass or less.

In addition to the above-described additive, for example, a known another additive such as antioxidant can be blended in the resin premix at an appropriate ratio as needed, as long as it does not damage the excellent effect of the present invention.

Examples of the antioxidant include hindered phenol antioxidant and another antioxidant (antioxidant excluding the hindered phenol antioxidant).

To be specific, examples of the hindered phenol antioxidant include 4-methyl-2,6-di-tert-butylphenol (BHT), triethyleneglycol-bis[3-(3-t-butyl-5-methyl-4-hydroxyphenyl)propionate] (trade name: IRGANOX 245, manufactured by Ciba Japan K.K.), 1,6-hexanediol-bis[3-(3,5-di-t-butyl-4-hydroxyphenyl)propionate] (trade name: IRGANOX 259, manufactured by Ciba Japan K.K.), pentaerythritoltetrakis[3-(3,5-di-t-butyl-4-hydroxyphenyl)propionate] (trade name: IRGANOX 1010, manufactured by Ciba Japan K.K.), octadecyl-3-(3,5-di-t-butyl-4-hydroxyphenyl)propionate (trade name: IRGANOX 1076, manufactured by Ciba Japan K.K.), N,N'-hexamethylenebis(3,5-di-t-butyl-4-hydroxy-hydrocinnamamide) (trade name: IRGANOX 1098, manufactured by Ciba Japan K.K.), isooctyl-3-(3,5-di-t-butyl-4-hydroxyphenyl)propionate (trade name: IRGANOX 1135, manufactured by Ciba Japan K.K.), 3,5-di-t-butyl-4-hydroxybenzylphosphonate-diethylester (trade name: IRGANOX 1222, manufactured by Ciba Japan K.K.), 2,4-bis[(octylthio)methyl]-O-cresol (trade name: IRGANOX 1520L, manufactured by Ciba Japan K.K.), tris(4-t-butyl-3-hydroxy-2,6-dimethylbenzyl)isocyanurate (trade name: IRGANOX 3790, manufactured by Ciba Japan K.K.), and 3,9-bis[1,1-dimethyl-2-[(3-t-butyl-4-hydroxy-5-methylphenyl)propionyloxy]ethyl]2,4,8,10-tetrao xaspiro[5.5]undecane (trade name: ADK STAB AO-80, manufactured by ADEKA CORPORATION).

Examples of the other antioxidant include hydrazide antioxidants such as hydrazide laurate, hydrazide salicylate, formhydrazide, acetohydrazide, hydrazide propionate, p-hydroxy benzoic acid hydrazide, hydrazide naphthoate, 3-hydroxy-2-naphthoic acid hydrazide, dihydrazide oxalate, dihydrazide malonate, dihydrazide succinate, dihydrazide adipate, dihydrazide azelate, dihydrazide sebacate, dodecane-diacid dihydrazide, dihydrazide maleate, dihydrazide fumarate, dihydrazide diglycolate, dihydrazide tartrate, dihydrazide malate, dihydrazide isophthalate, dihydrazide terephthalate, dimer acid dihydrazide, 2,6-naphthoic acid dihydrazide, 2,4-dioxo-5-propyl-1,3-imidazolidine dipropanoic acid dihydrazide, and hydrazide polyacrylate; furthermore, phosphoric acid antioxidants such as tris(2,4-di-t-butylphenyl)phosphite (trade name: IRGAFOS 168, manufactured by Ciba Japan K.K.), bis(2,4-di-t-butylphenyl)pentaerythritol diphosphite (trade name: ADEKA STAB PEP-24G, manufactured by ADEKA CORPORATION), trisnonylphenol phosphite (trade name: ADEKA STAB 1178, manufactured by ADEKA CORPORATION), and tridecyl phosphite (trade name: ADEKA STAB 3010, manufactured by ADEKA CORPORATION); and thiophene antioxidants such as 2,5-thiophenediylbis(5-t-butyl-1,3-benzoxazole) (trade name: TINOPAL OB, manufactured by Ciba Japan K.K.).

These antioxidants can be used alone or in combination of two or more.

In addition to the above-described additive, for example, a known another additive can be blended in the resin premix at an appropriate ratio as needed, as long as it does not damage the excellent effect of the present invention. Examples thereof include pigment (color pigment), dye, ultraviolet absorber, antioxidant, curing accelerator, thermal stabilizer, light stabilizer, delustrant, adhesion-imparting agent, silane coupling agent, chain extender, defoaming agent, plasticizer, antiblocking agent, heat resistant stabilizer, light resistant stabilizer, mold releasing agent, lubricant, filler, and hydrolysis inhibitor.

To prepare the resin premix, the polyol, the urethane-formation catalyst, the blowing agent, and if necessary, the additive are blended at the above-described ratio to be mixed by a known method.

In this manner, the resin premix can be prepared.

The additive may be added at the time of the synthesis of each of the components of the resin premix, may be added at the time of the blending and mixing of each of the components, or furthermore, may be added after the mixing of each of the components.

Examples of the polyisocyanate include polyisocyanate monomer and polyisocyanate derivative.

Examples of the polyisocyanate monomer include aromatic polyisocyanate, araliphatic polyisocyanate, and aliphatic polyisocyanate.

Examples of the aromatic polyisocyanate include aromatic diisocyanates such as tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, 1,5-naphthalene diisocyanate (NDI), diphenylmethane diisocyanate (4,4'-, 2,4'-, or 2,2'-diphenylmethane diisocyanate or a mixture thereof) (MDI), 4,4'-toluidine diisocyanate (TODI), and 4,4'-diphenylether diisocyanate.

Examples of the araliphatic polyisocyanate include araliphatic diisocyanates such as xylylene diisocyanate (1,3- or 1,4-xylylene diisocyanate or a mixture thereof) (XDI), tetramethylxylylene diisocyanate (1,3- or 1,4-tetramethylxylylene diisocyanate or a mixture thereof) (TMXDI), and ω,ω'-diisocyanate-1,4-diethylbenzene.

Examples of the aliphatic polyisocyanate include aliphatic diisocyanates such as ethylene diisocyanate, trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethylhexamethylene diisocyanate, 2,6-diisocyanate methyl caproate, and dodecamethylene diisocyanate.

In the aliphatic polyisocyanate, an alicyclic polyisocyanate is included. Examples of the alicyclic polyisocyanate include alicyclic diisocyanates such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate) (IPDI), methylenebis(cyclohexyl isocyanate) (4,4'-, 2,4'-, or 2,2'-methylenebis(cyclohexyl isocyanate and trans,trans-isomer, trans,cis-isomer, cis,cis-isomer thereof, or a mixture thereof)) ($H_{12}MDI$), methylcyclohexane diisocyanate (methyl-2,4-cyclohexane diisocyanate, methyl-2,6-cyclohexane diisocyanate), norbornane diisocyanate (various isomers or a mixture thereof) (NBDI), and bis(isocyanatomethyl)cyclohexane (1,3- or 1,4-bis(isocyanatomethyl)cyclohexane or a mixture thereof) ($H_6XDI$).

These polyisocyanate monomers can be used alone or in combination of two or more.

Examples of the polyisocyanate derivative include multimer (for example, dimer, trimer (for example, isocyanurate modified product, iminooxadiazinedione modified product), pentamer, heptamer, or the like) of the above-described polyisocyanate monomer, allophanate modified product (for example, allophanate modified product produced by reaction of the above-described polyisocyanate monomer with a low molecular weight polyol or the like), polyol modified product (for example, polyol modified product (alcohol adduct) produced by reaction of the above-described polyisocyanate monomer with a low molecular weight polyol or the like), biuret modified product (for example, biuret modified product produced by reaction of the above-described polyisocyanate monomer with water and amines or the like), urea modified product (for example, urea modified product produced by reaction of the above-described polyisocyanate monomer with diamine or the like), oxadiazinetrione modified product (for example, oxadiazinetrione produced by reaction of the above-described polyisocyanate monomer with a carbon dioxide gas or the like), carbodiimide modified product (carbodiimide modified product produced by decarboxylation condensation reaction of the above-described polyisocyanate monomer or the like), uretdione modified product, and uretonimine modified product.

Furthermore, an example of the polyisocyanate derivative includes a polymethylene polyphenylene polyisocyanate (crude MDI, polymeric MDI).

These polyisocyanate derivatives can be used alone or in combination of two or more.

As the polyisocyanate, preferably, an aromatic polyisocyanate and a derivative thereof are used. More preferably, a tolylene diisocyanate (TDI), a diphenylmethane diisocyanate (MDI), and a polymethylene polyphenylene polyisocyanate (crude MDI, polymeric MDI) are used.

These polyisocyanates can be used alone or in combination of two or more.

As the polyisocyanate, further more preferably, a tolylene diisocyanate, and a combination of a tolylene diisocyanate and a diphenylmethane diisocyanate are used, particularly preferably, a combination of a tolylene diisocyanate and a diphenylmethane diisocyanate is used.

Next, in this method, the VOC reducing agent is added to the resin premix and eventually to the polyisocyanate (adding step).

The addition amount of the VOC reducing agent is appropriately set so that the VOC reducing agent content in the polyurethane foam is within a desired range.

The VOC reducing agent content in the polyurethane foam is appropriately determined in accordance with a required reduction amount of the volatile organic compound (VOC).

To be more specific, in the method for reducing a volatile organic compound (VOC), as shown in the following formula (I), the cation portion content of the VOC reducing agent in the polyurethane foam and the reduction amount of the volatile organic compound (VOC) (VOC content in the polyurethane foam) are shown by a linear function.

Formula (I):

$$[\text{VOC content in polyurethane foam}] = a \times [\text{cation portion content of VOC reducing agent}] + b$$

In the above-described formula (I), "a" and "b" are a constant number set in accordance with the kind of the VOC, the kind of the polyurethane foam, the kind of the VOC reducing agent, or the like.

For example, when the tetrakis[tris(dimethylamino)phosphoranylideneamino]phosphonium dodecylbenzenesulfonyl (a compound in which in the above-described formula (3), $R^2$ is a methyl group and $X^-$ is a straight-chain dodecylbenzene sulfonic acid anion) is used as the VOC reducing agent, the acetaldehyde (AA) in the polyurethane foam is, for example, reduced according to the linear function in accordance with the following formula (II) based on the tetrakis[tris(dimethylamino)phosphoranylideneamino]phosphonium (cation portion) (ref: FIG. 1).

Formula (II):

$$[\text{acetaldehyde content in polyurethane foam}] = a_{AA} \times [\text{cation portion content of VOC reducing agent}] + b_{AA}$$

In the above-described formula (II), "$a_{AA}$" is a constant number of, for example, $-3 \times 10^{-4}$ or more, preferably, $-1.5 \times 10^{-4}$ or more, and for example, $-0.5 \times 10^{-4}$ or less, preferably $-1.0 \times 10^{-4}$ or less. As "$a_{AA}$", particularly preferably, $-1.30 \times 10^{-4}$ is used.

In the above-described formula (II), "$b_{AA}$" is a constant number of, for example, 0.3 or more, preferably 0.33 or more, and for example, 0.7 or less, preferably 0.5 or less. As "$b_{AA}$", particularly preferably, 0.348 is used.

In the above-described formula (II), the acetaldehyde content in the polyurethane foam is measured in conformity with Examples to be described later. The cation portion content of the VOC reducing agent is calculated as a ratio with respect to 100 parts by mass of the polyol in conformity with Examples to be described later.

For example, when the tetrakis[tris(dimethylamino)phosphoranylideneamino]phosphonium dodecylbenzenesulfonyl (a compound in which in the above-described formula (3), $R^2$ is a methyl group and $X^-$ is a straight-chain dodecylbenzene sulfonic acid anion) is used as the VOC reducing agent, the propionaldehyde (PA) in the polyurethane foam is, for example, reduced according to the linear function in accordance with the following formula (III) based on the tetrakis[tris(dimethylamino)phosphoranylideneamino]phosphonium (cation portion) (ref: FIG. 2).

Formula (III):

$$[\text{propionaldehyde content in polyurethane foam}] = a_{pA} \times [\text{cation portion content of VOC reducing agent}] + b_{PA}$$

In the above-described formula (III), "$a_{PA}$" is a constant number of, for example, $-3 \times 10^{-3}$ or more, preferably, $-1.5 \times 10^{-3}$ or more, and for example, $-0.5 \times 10^{-3}$ or less, preferably $-1.0 \times 10^{-3}$ or less. As "$a_{PA}$", particularly preferably, $-1.16 \times 10^{-3}$ is used.

In the above-described formula (III), "$b_{PA}$" is a constant number of, for example, 1.5 or more, preferably 2.0 or more, and for example, 5 or less, preferably 3 or less. As "$b_{PA}$", particularly preferably, 2.31 is used.

In the above-described formula (III), the propionaldehyde content in the polyurethane foam is measured in conformity with Examples to be described later. The cation portion content of the VOC reducing agent is calculated as a ratio with respect to 100 parts by mass of the polyol in conformity with Examples to be described later.

In this manner, in the method for reducing a volatile organic compound (VOC), the volatile organic compound (VOC) can be reduced according to the linear function in accordance with the cation portion content of the above-described VOC reducing agent.

In other words, the cation portion content of the VOC reducing agent in the polyurethane foam is appropriately set in accordance with the linear function such as the above-described formulas (I) to (III).

The cation portion content of the VOC reducing agent in the polyurethane foam with respect to the total amount of the polyurethane foam based on the mass is, for example, 5 ppm or more, preferably 50 ppm or more, more preferably 500 ppm or more, and for example, 15000 ppm or less, preferably 10000 ppm or less, more preferably 8000 ppm or less.

To be specific, the addition amount of the VOC reducing agent with respect to 100 parts by mass of the polyol in the resin premix is, for example, 0.0005 parts by mass or more, preferably 0.002 parts by mass or more, more preferably 0.003 parts by mass or more, further more preferably 0.005 parts by mass or more, further more preferably 0.010 parts by mass or more, further more preferably 0.025 parts by mass or more, further more preferably 0.035 parts by mass or more, further more preferably 0.045 parts by mass or more, particularly preferably 0.05 parts by mass or more, and for example, 2 parts by mass or less, preferably 1 part by mass or less, more preferably 0.5 parts by mass or less, further more preferably 0.3 parts by mass or less, further more preferably 0.15 parts by mass or less, particularly preferably 0.10 parts by mass or less.

In view of sufficient reduction of the VOC, the addition amount of the VOC reducing agent with respect to 100 parts by mass of the polyol in the resin premix based on the mass is, for example, 5 ppm or more, preferably 15 ppm or more, more preferably 25 ppm or more, further more preferably 50 ppm or more, further more preferably 100 ppm or more, further more preferably 200 ppm or more, further more preferably 300 ppm or more, further more preferably 400 ppm or more, particularly preferably 500 ppm or more, and in view of cost reduction, for example, 20000 ppm or less,

preferably 3000 ppm or less, more preferably 2000 ppm or less.

In this manner, the resin premix containing the VOC reducing agent (VOC reducing agent-containing resin premix) can be obtained.

Next, in this method, the resin premix and the polyisocyanate are mixed to foam (foaming step).

To be more specific, the polyisocyanate is added to the resin premix (containing the VOC reducing agent) to be stirred to react, and foam by, for example, a known foaming method such as slab method, mold method, and spray method.

The mixing ratio of the polyisocyanate with respect to the resin premix, for example, as an isocyanate index (ratio (stoichiometry ratio) of the isocyanate group with respect to 100 of active hydrogen including hydroxyl group in the macropolyol, hydroxyl group and amino group in the cross-linking agent, and water as the blowing agent in the resin premix), is, for example, 70 or more, preferably 85 or more, and for example, 140 or less, preferably 120 or less.

In this manner, the polyurethane foam can be produced.

As described above, the resin premix is used so as to reduce the volatile organic compound (VOC) in the polyurethane foam.

In the method for reducing a volatile organic compound (VOC), the VOC reducing agent is contained in the polyurethane foam, so that the volatile organic compound (VOC) can be efficiently reduced, and a degree of reduction thereof can be arbitrarily adjusted.

That is, generally, the hydrazine compound (hydrazide antioxidant such as dihydrazide adipate) used so as to reduce the volatile organic compound (VOC) can reduce the volatile organic compound (VOC), and the reduction amount of the volatile organic compound (VOC) is fixed regardless of the used amount of the hydrazine compound and there is a limit therein. Furthermore, there is a disadvantage that a degree of reduction of the volatile organic compound (VOC) cannot be adjusted.

In this point, according to the above-described VOC reducing agent (compound represented by the above-described formula (1)), the volatile organic compound (VOC) can be reduced, and in addition, a degree of reduction thereof can be arbitrarily adjusted.

Thus, the addition amount of the VOC reducing agent can be adjusted in accordance with the required reduction amount, and the high efficiency and the cost reduction in the reduction of the volatile organic compound (VOC) can be achieved.

According to the above-described method for producing a polyurethane foam and the above-described resin premix, the polyurethane foam having the volatile organic compound (VOC) reduced at an arbitrary degree can be produced.

In the above-described adding step, before the resin premix without containing the VOC reducing agent is mixed with the polyisocyanate without containing the VOC reducing agent, the VOC reducing agent is added to the resin premix and eventually to the polyisocyanate.

In the production of the polyoxyalkylene polyol, the compound represented by the above-described formula (1) can be used as a reaction catalyst of the addition polymerization of the alkylene oxide.

When the compound represented by the above-described formula (1) is used as the reaction catalyst (addition polymerization catalyst) of the addition polymerization of the alkylene oxide, preferably, the compound represented by the above-described formula (3) is used, more preferably, the compound in which in the above-described formula (3), $X^-$ is represented as a hydroxyanion or an alkoxyanion is used, particularly preferably, the compound in which in the above-described formula (3), $X^-$ is represented by a hydroxyanion is used.

The alkylene oxide is addition polymerized with an initiator such as low molecular weight polyol and low molecular weight polyamine under the presence of the addition polymerization catalyst (compound represented by the above-described formula (1)), so that the polyoxyalkylene polyol containing the compound represented by the above-described formula (1) is obtained.

When the obtained polyoxyalkylene polyol is used in the production of the polyurethane foam, the compound represented by the above-described formula (1) is contained in the obtained polyurethane foam. At this time, the compound represented by the above-described formula (1) can function as the VOC reducing agent.

That is, the compound represented by the above-described formula (1) in the polyoxyalkylene polyol can be also used as the VOC reducing agent. In this case, the used amount of the compound represented by the above-described formula (1) is appropriately adjusted so that the content ratio of the VOC reducing agent with respect to 100 parts by mass of the polyol in the resin premix is within the above-described range.

Furthermore, for example, the polyoxyalkylene polyol containing the compound represented by the above-described formula (1) can be also used as a material of the polymer polyol, the polyurethane polyol, or the like. Preferably, the above-described polyoxyalkylene polyol is used as a material of the polymer polyol. In this case, the obtained polymer polyol contains the compound represented by the above-described formula (1).

When the obtained polymer polyol is used in the production of the polyurethane foam, the compound represented by the above-described formula (1) is contained in the obtained polyurethane foam. At this time, the compound represented by the above-described formula (1) can function as the VOC reducing agent.

That is, in this case, the compound represented by the above-described formula (1) in the polyol can be also used as the VOC reducing agent. In this case, the used amount of the compound represented by the above-described formula (1) is appropriately adjusted so that the content ratio of the VOC reducing agent with respect to 100 parts by mass of the polyol in the resin premix is within the above-described range.

Furthermore, as described above, when the VOC reducing agent is contained in the resin premix in advance, by using the VOC reducing agent as the production catalyst (addition polymerization catalyst) of the polyol, the VOC reducing agent is further added to the obtained resin premix.

Thus, before the resin premix containing the VOC reducing agent is mixed with the polyisocyanate, the VOC reducing agent is added to the resin premix and eventually the polyisocyanate.

Also, the polyol obtained by using the VOC reducing agent as the production catalyst of the polyol, and the polyol obtained by using an alkali metal hydroxide or the like without using the VOC reducing agent as the production catalyst of the polyol can be mixed at an appropriate ratio to be used. In this case, the VOC reducing agent is contained in the resin premix containing the polyol. The VOC reducing agent is further added to be used in the production of the polyurethane foam.

Furthermore, as the production catalyst of the polyol, the VOC reducing agent and the alkali metal hydroxide are used in combination, so that the polyol can be produced. In this case, the VOC reducing agent is contained in the resin premix containing the polyol. The VOC reducing agent is further added to be used in the production of the polyurethane foam.

Also, if necessary, after the production of the polyoxyalkylene polyol and before the production of the polyurethane foam, $X^-$ of the compound represented by the above-described formula (1) can be appropriately changed.

To be more specific, for example, as the reaction catalyst in the production of the above-described polyoxyalkylene polyol, when the compound represented by the above-described formula (1) and in which $X^-$ is the hydroxy anion is used, the obtained polyoxyalkylene polyol contains the compound represented by the above-described formula (1) and in which $X^-$ is the hydroxy anion.

The polyoxyalkylene polyol can be also used in the production of the polyurethane foam as it is. Alternatively, for example, a compound that supplies another $X^-$ such as sulfonic acid (for example, p-toluene sulfonic acid, dodecyl benzene sulfonic acid, benzene sulfonic acid, methane sulfonic acid, camphor sulfonic acid, or the like) is added to the polyoxyalkylene polyol to be mixed and stirred, so that $X^-$ can be changed into the sulfonyl anion.

In this manner, the kind of the addition polymerization catalyst in the production of the polyoxyalkylene polyol, and the kind of the VOC reducing agent contained in the polyurethane foam can be changed.

That is, in the addition polymerization of the alkylene oxide, the compound appropriate for the addition polymerization of the alkylene oxide (for example, a compound represented by the above-described formula (1) and in which $X^-$ is the hydroxy anion) is used, and thereafter, $X^-$ is changed, so that the compound (for example, a compound represented by the above-described formula (1) and in which $X^-$ is the sulfonyl anion) appropriate as the VOC reducing agent can be contained in the polyurethane foam.

According the method, the volatile organic compound (VOC) can be efficiently reduced, and a degree of reduction can be arbitrarily adjusted.

## Examples

Next, the present invention is described based on Examples and Comparative Examples. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### <Description of Material>

PZN compound: dodecylbenzenesulfonyl of tetrakis[tris(dimethylamino)phosphoranylideneamino]phosphonium (PZN cation (hereinafter, referred to as PZN)) (a compound in which in the above-described formula (3), $R^2$ is a methyl group and $X^-$ is a straight-chain dodecylbenzene sulfonic acid anion)

EP828: ACTCOL EP-828 (polyoxyalkylene polyol (block copolymer of propylene oxide-ethylene oxide), ethylene oxide content (terminated oxyethylene group content): 15 mass%, number average molecular weight: 6000, average functionality: 3, hydroxyl value = 28 mgKOH/g, manufactured by Mitsui Chemicals, Inc.)

EP330N: ACTCOL EP-330N (polyoxyalkylene polyol (block copolymer of propylene oxide-ethylene oxide),

ethylene oxide content (terminated oxyethylene group content): 15 mass%, number average molecular weight: 5000, average functionality: 3, hydroxyl value = 34 mgKOH/g, manufactured by Mitsui Chemicals, Inc.)

POP-3623: ACTCOL POP-3623 (polymer polyol, hydroxyl value = 22 mgKOH/g, manufactured by Mitsui Chemicals, Inc.)

EP-505S: ACTCOL EP-505S (interconnecting agent, polyether polyol (polyoxyalkylene polyol (random copolymer of propylene oxide-ethylene oxide)), ethylene oxide content: 70 mass%, number average molecular weight: 3300, average functionality: 3, hydroxyl value = 52 mgKOH/g, manufactured by Mitsui Chemicals, Inc.)

KL-210: ACTCOL KL-210 (cross-linking agent, average functionality: 3.75, hydroxyl value = 840 mgKOH/g, manufactured by Mitsui Chemicals, Inc.)

IRGANOX 1135: antioxidant, manufactured by BASF SE

ADH: dihydrazide adipate, hydrazide antioxidant, manufactured by Japan Finechem Inc.

VDH: AJICURE VDH, hydrazide antioxidant, manufactured by Ajinomoto Fine-Techno Co., Inc.

33LV: DABCO 33LV (amine catalyst (urethane-formation catalyst), diethylene glycol solution with a concentration of 33 mass% triethylenediamine, manufactured by Air Products Japan K.K.)

A-1: Niax A-1 (amine catalyst (urethane-formation catalyst), manufactured by Momomentive)

L5309: L-5309 (silicone foam stabilizer, manufactured by Momentive)

L3601: L-3601 (silicone foam stabilizer, manufactured by Dow Corning Toray Co., Ltd.)

DC2525: DC-2525 (silicone foam stabilizer, manufactured by Air Products Japan K.K.)

TM20: COSMONATE TM-20 (polyisocyanate (mixture of 80 mass% of mixture (TDI) of 2,4-tolylene diisocyanate and 2,6-tolylene diisocyanate at a mass ratio of 80 to 20, and 20 mass% of diphenylmethane diisocyanate (MDI)), isocyanate group content: 45 mass%, manufactured by Mitsui Chemicals, Inc.)

Synthesis Example 1 (Polyoxyalkylene Polyol A Containing VOC Reducing Agent)

As an addition polymerization catalyst, a tetrakis[tris(dimethylamino)phosphonylideneamino]phosphonium hydroxide having an amount of 0.18 mol%/molOH with respect to a glycerine and a hydroxyl group of the glycerine was added to an autoclave equipped with a stirring device, a thermometer, and a pressure gauge to be then subjected to reduced pressure dehydration at 100°C for 6 hours. Thereafter, a propylene oxide was continuously introduced thereto to be subjected to addition polymerization at a reaction temperature of 120°C and the maximum reaction pressure of 3.8 kg/cm$^2$.

Next, an ethylene oxide was continuously introduced thereto to be subjected to addition polymerization at a reaction temperature of 120°C and the maximum reaction pressure of 3.8 kg/cm$^2$. Next, 2.1 equivalent of dodecylbenzene sulfonic acid was added to the tetrakis[tris(dimethylamino)phosphonylideneamino]phosphonium hydroxide to be stirred at 100°C for 2 hours. In this manner, a polyoxyalkylene polyol A containing a tetrakis[tris(dimethylamino)phosphoranylideneamino]phosphonium dodecylbenzenesulfonyl (PZN compound) (hereinafter, polyol A) was obtained.

The polyol A had an average functionality of 3, a hydroxyl value of 36 mgKOH/g, and a content proportion of a terminated oxyethylene group of 17 mass%. The content ratio of the PZN (cation portion) of the PZN compound with respect to the polyol A was calculated as 840 ppm from the charged amount.

Synthesis Example 2 (Polyoxyalkylene Polyol B Containing VOC Reducing Agent)

As an addition polymerization catalyst, a tetrakis[tris(dimethylamino)phosphoranylideneamino]phosphonium hydroxide having an amount of 0.18 mol%/molOH with respect to a glycerine and a hydroxyl group of the glycerine was added to an autoclave equipped with a stirring device, a thermometer, and a pressure gauge to be then subjected to reduced pressure dehydration at 100°C for 6 hours. Thereafter, a propylene oxide was continuously introduced thereto to be subjected to addition polymerization at a reaction temperature of 90°C and the maximum reaction pressure of 3.8 kg/cm$^2$. Next, an ethylene oxide was continuously introduced thereto to be subjected to addition polymerization at a reaction temperature of 100°C and the maximum reaction pressure of 3.8 kg/cm$^2$. Next, 2.3 equivalent of dodecylbenzene sulfonic acid was added to the PZN to be stirred at 100°C for 2 hours. In this manner, a polyoxyalkylene polyol B (hereinafter, polyol B) was obtained.

The polyol B had an average functionality of 3, a hydroxyl value of 24 mgKOH/g, and a content proportion of a terminated oxyethylene group of 15 mass%. The content ratio of the PZN (cation portion) of the PZN compound with respect to the polyol B was calculated as 550 ppm from the charged amount.

Synthesis Example 3 (Polyoxyalkylene Polyol C Containing VOC Reducing Agent)

As an addition polymerization catalyst, a tetrakis[tris(dimethylamino)phosphoranylideneamino]phosphonium hydroxide having an amount of 0.18 mol%/molOH with respect to a glycerine and a hydroxyl group of the glycerine was

added to an autoclave equipped with a stirring device, a thermometer, and a pressure gauge to be then subjected to reduced pressure dehydration at 100°C for 6 hours. Thereafter, a propylene oxide was continuously introduced thereto to be subjected to addition polymerization at a reaction temperature of 120°C and the maximum reaction pressure of 3.8 kg/cm$^2$. Next, an ethylene oxide was continuously introduced thereto to be subjected to addition polymerization at a reaction temperature of 110°C and the maximum reaction pressure of 3.8 kg/cm$^2$. Next, 2.0 equivalent of dodecylbenzene sulfonic acid was added to the tetrakis[tris(dimethylamino)phosphoranylideneamino]phosphonium hydroxide to be stirred at 100°C for 2 hours. In this manner, a polyoxyalkylene polyol C (hereinafter, polyol C) was obtained.

The polyol C had an average functionality of 3, a hydroxyl value of 28 mgKOH/g, and a content proportion of a terminated oxyethylene group of 15 mass%. The content ratio of the PZN (cation portion) of the PZN compound with respect to the polyol C was calculated as 640 ppm from the charged amount.

Synthesis Example 4 (Polymer Polyol D Containing VOC Reducing Agent)

An autoclave equipped with a stirring device, a thermometer, a pressure gauge, and a liquid feeder was charged with the polyol A until a full liquid state, and the temperature of the charged mixture was increased until 120°C, while stirred. The autoclave was continuously charged with a liquid mixture of the polyol A, a 2,2'-azobis(isobutylonitrile), an acrylonitrile, and a styrene. The initial reaction liquid obtained continuously from a discharge port was discarded, and the subsequent reaction liquid was used in the next step. As the reaction conditions, the reaction temperature was 120°C, the reaction pressure was 440 kPa, and the retention time was 50 minutes. The heating and reduced pressure treatment was carried out under the conditions of 655 Pa or less for 3 hours, and an unreacted ethylene unsaturated monomer and a decomposition component of a polymerization initiator were removed, so that a polymer polyol D (hereinafter, polyol D) was obtained. The polyol D had an average functionality of 3, a hydroxyl value of 22 mgKOH/g, a content proportion of polyol A-based component of 60 mass%, a content proportion of acrylonitrile-based polymer component of 16 mass%, and a content proportion of styrene-based polymer component of 24 mass%. These content proportions were calculated from the charged amount, and the amount of the unreacted monomer determined by a gas chromatography method. The content ratio of the PZN (cation portion) of the PZN compound based on the polyol A with respect to the polyol D was calculated as 504 ppm.

<Production of Polyurethane Foam>

(Example 1)

A resin premix was prepared by blending and mixing 100 parts by mass of EP 828 (polyoxyalkylene polyol), 0.35 parts by mass of 33LV (amine catalyst), 0.06 parts by mass of A-1 (amine catalyst), 2.7 parts by mass of water (blowing agent), 3.0 parts by mass of KL210 (cross-linking agent), 0.5 parts by mass of EP-505S (interconnecting agent), 1.0 part by mass of L-3601 (foam stabilizer), and 672 ppm (/100 parts by mass of polyol) of tetrakis[tris(dimethylamino)phosphoranylideneamino]phosphonium dodecylbenzenesulfonyl (VOC reducing agent, PZN compound).

Next, the temperature of the obtained resin premix was adjusted to 22 ±1°C, and 32.1 parts by mass (isocyanate index: 95) of TM20 (polyisocyanate) in which the temperature was adjusted to 22 ±1°C was added to the obtained resin premix. Immediately, the obtained mixture was strongly stirred at 5000 rpm for 5 seconds with a homogenizer to be immediately poured into a mold having an inner size of 400 mm × 400 mm × 100 mm in which the temperature was adjusted to 65°C in advance, and a lid thereof was closed to foam. Thereafter, the curing reaction was processed for 6 minutes, while the mold was retained at 65°C, and a polyurethane foam was taken out from the mold. In this manner, a flexible polyurethane foam was produced.

(Examples 2 to 12 and Comparative Examples 1 to 5)

A polyurethane foam was produced in accordance with the mixing formulation described in Table 1 in the same manner as that of Example 1. Examples 9 to 12 are Referential Examples.

In Examples 2 to 8, the PZN compound as the VOC reducing agent was added at the time of the preparation of the resin premix in the same manner as that of Example 1.

In Examples 9 to 12, the PZN compound contained in the polyols A to D was used as the VOC reducing agent without adding the PZN compound at the time of the preparation of the resin premix.

Furthermore, in Comparative Example 1, the VOC reducing agent was not added; in Comparative Examples 2 to 4, the dihydrazide adipate (ADH) was added as the VOC reducing agent instead of the compound represented by the above-described formula (1); and in Comparative Examples 5 to 7, AJICURE VDH (manufactured by Ajinomoto Fine-Techno Co., Inc., VDH) was added as the VOC reducing agent instead of the compound represented by the above-described formula (1).

In Table 1, the PZN content (based on the cation portion) was represented as a ratio (ppm) with respect to 100 parts by mass of the polyol in the resin premix.

<Aldehyde Measurement of Polyurethane Foam>

The aldehyde measurement of the polyurethane foam produced in Examples 1 to 12 and Comparative Examples 1 to 5 was measured by the following measurement method, and the results of an acetaldehyde amount and a propionaldehyde amount of each of the polyurethane foams were obtained.

The results are shown in Table.

<Measurement Method>

(1) Density

The size and the weight of the polyurethane foam after the elapse of 24 hours after foaming were measured to calculate the density.

(2) Measurement of Acetaldehyde (AA) and Propionaldehyde (PA)

After the measurement of the above-described (1) Density, the polyurethane foam was cut into a size of 80 mm × 100 mm, thereby obtaining a sample. The obtained sample was put into a sealed vessel to be stored for 1 week.

Thereafter, the sample was put into a 10 L bag made of a fluorine resin to be purged 3 times with pure nitrogen.

Next, the pure nitrogen of about 4 L was poured thereto to be heated for 2 hours in a thermostatic chamber of 65°C.

Next, after 3.0 L was collected into a DNPH cartridge for aldehyde analysis at a flow rate of 0.5 L/min, the entire remaining gas was absorbed to calculate the entire gas amount.

Thereafter, a derivatized product was eluted into the DNPH cartridge for aldehyde analysis through the acetonitrile to make up constant 5 mL volume to be measured with HPLC.

Then, from the calculation results, each of the aldehyde amounts was converted per the entire gas amount (sample).

Also, from the results of Examples 2 to 6, the relationship between the content ratio of the cation portion of the VOC reducing agent and the reduction amount of the acetaldehyde was shown in FIG. 1, and furthermore, the relationship between the used amount of the content ratio of the cation portion of the VOC reducing agent and the reduction amount of the propionaldehyde was shown in FIG. 2.

[Table 1]

| Table 1 | | | | | | | | | | | | | | | | | | | | |
|---|---|---|---|---|---|---|---|---|---|---|---|---|---|---|---|---|---|---|---|---|
| No. | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 | Comp. Ex. 2 | Comp. Ex. 3 | Comp. Ex. 4 | Comp. Ex. 5 | Comp. Ex. 6 | Comp. Ex. 7 |
| Mixing | EP-828 | 100 | 50 | 50 | 50 | 50 | 50 | - | - | - | - | - | - | - | - | - | - | - | - | - |
| | EP-330N | - | - | - | - | - | - | 33 | 33 | - | - | - | - | 33 | 33 | 33 | 33 | 33 | 33 | 33 |
| | Polyol A | - | - | - | - | - | - | - | - | 33 | 50 | - | - | - | - | - | - | - | - | - |
| | Polvol B | - | - | - | - | - | - | - | - | - | - | 70 | - | - | - | - | - | - | - | - |
| | Polyol C | - | - | - | - | - | - | - | - | - | - | - | 80 | - | - | - | - | - | - | - |
| | POP-3623 | - | 50 | 50 | 50 | 50 | 50 | 67 | 67 | - | - | 30 | 20 | 67 | 67 | 67 | 67 | 67 | 67 | 67 |
| | Polvol D | - | - | - | - | - | - | - | - | 67 | 50 | - | - | - | - | - | - | - | - | - |
| | EP-505S | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | KL-210 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3 | 3.0 | 3 |
| Formulation (parts by mass) | IRGANOX 1135 | - | - | - | - | - | - | 0.4 | 0.4 | - | - | - | 0.4 | 0.6 | 0.6 | 0.6 | 0.6 | 0.6 | 0.6 | 0.6 |
| | ADH | - | - | - | - | - | - | - | - | - | - | - | - | - | 0.2 | 0.3 | 0.5 | - | - | - |
| | VDH | - | - | - | - | - | - | - | 0.1 | - | - | - | - | - | - | - | - | 0.15 | 0.3 | 0.5 |
| | H20 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 |
| | 33LV | 0.35 | 0.35 | 0.35 | 0.35 | 0.35 | 0.35 | 0.35 | 0.35 | 0.35 | 0.35 | 0.35 | 0.35 | 0.36 | 0.36 | 0.36 | 0.36 | 0.36 | 0.36 | 0.36 |
| | A-1 | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 |
| | L-5309 | - | - | - | - | - | - | 2.0 | 2.0 | - | - | 1.0 | - | 2.0 | 2.0 | 2.0 | 2.0 | 2 | 2.0 | 2 |
| | L-3601 | 1.0 | 1.0 | 1.0 | 1.0 | 1.0 | 1.0 | - | - | - | 1.0 | - | 1.0 | - | - | - | - | - | - | - |
| | DC2525 | - | - | - | - | - | - | - | - | 1.0 | - | - | - | - | - | - | - | - | - | - |
| | Total | 107.61 | 107.61 | 107.61 | 107.61 | 107.61 | 107.61 | 109.01 | 109.11 | 107.61 | 107.61 | 107.61 | 108.01 | 109.22 | 109.37 | 109.52 | 109.72 | 109.37 | 109.52 | 109.72 |
| PZN Addition Amount (ppm/100 parts bv mass of Polvol) | | 672 | 100 | 350 | 672 | 1500 | 2000 | 470 | 470 | 0 | 0 | 0 | 0 | 0 | 0 | 0 | 0 | 0 | 0 | 0 |

(continued)

Table 1

| No. | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|---|---|---|---|---|
| PZN Content (ppm/ 100 parts by mass of Polyol) | | 0 | 0 | 0 | 0 | 0 | 0 | 0 | 0 | 615 | 672 | 385 | 512 | 0 | 0 | 0 | 0 | 0 | 0 | 0 |
| Isocyanate (kind) | | TM20 | TM20 | TM20 | TM20 | TM20 | TM20 | TM20 | TM20 | TM20 | TM20 | TM20 | TM20 | TM20 | TM20 | TM20 | TM20 | TM20 | TM20 | TM20 |
| Isocyanate Index | | 95 | 95 | 95 | 95 | 95 | 95 | 95 | 95 | 95 | 95 | 95 | 95 | 95 | 95 | 95 | 95 | 95 | 95 | 95 |
| Evaluation | Density ($kg/m^3$) | 60.1 | 59.9 | 59.9 | 59.9 | 60.1 | 60.2 | 59.9 | 59.9 | 60.0 | 59.9 | 59.9 | 59.9 | 59.9 | 60.1 | 59.9 | 60.2 | 60.2 | 60.3 | 60.1 |
| | AA (ug/80 $cm^2$) | 0.20 | 0.33 | 0.31 | 0.33 | 0.08 | 0.12 | 0.29 | 0.30 | 0.21 | 0.15 | 0.29 | 0.13 | 0.32 | 0.30 | 0.28 | 0.29 | 0.37 | 0.36 | 0.38 |
| | PA (ug/80 $cm^2$) | 1.70 | 2.00 | 2.00 | 1.10 | 0.59 | 0.12 | 1.70 | 1.00 | 1.80 | 1.90 | 1.20 | 0.87 | 2.70 | 1.00 | 0.95 | 0.97 | 0.96 | 0.93 | 0.95 |

(Consideration)

From Examples 1 to 12 and Comparative Example 1, it was confirmed that when the PZN was contained in the polyurethane foam, the acetaldehyde (AA) and the propionaldehyde (PA) as the volatile organic compound (VOC) were capable of being reduced.

From FIGS. 1 and 2, it was confirmed that the volatile organic compound (VOC) was reduced according to the linear function in accordance with the PZN content, and in this manner, the reduction amount of the volatile organic compound (VOC) was capable of being adjusted and set at an arbitrary reduction amount.

Meanwhile, from FIGS. 3 and 4, it was confirmed that when the hydrazide antioxidant was capable of reducing the volatile organic compound (VOC), the reduction amount of the volatile organic compound (VOC) was fixed regardless of the used amount of the hydrazide antioxidant and there was a limit therein.

Industrial Applicability

The method for reducing a volatile organic compound, the method for producing a polyurethane foam, and the resin premix of the present invention can be widely used in various industrial fields using the polyurethane foam.

## Claims

1. A method for reducing a volatile organic compound in a polyurethane foam, wherein

    the polyurethane foam contains a compound represented by the following formula (1);
    the method comprising:

    a preparing step of preparing a resin premix containing a polyol, and a polyisocyanate,
    an adding step of adding the compound represented by the following formula (1) to the resin premix, and
    a foaming step of mixing and foaming the resin premix and the polyisocyanate;

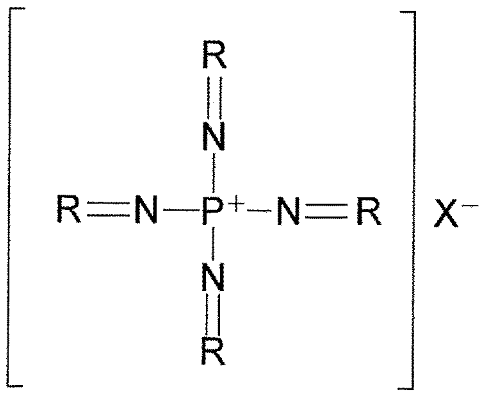

(1)

wherein -N=R represents the following partial structural formula (A) or the following partial structural formula (B), and $X^-$ represents an anion;

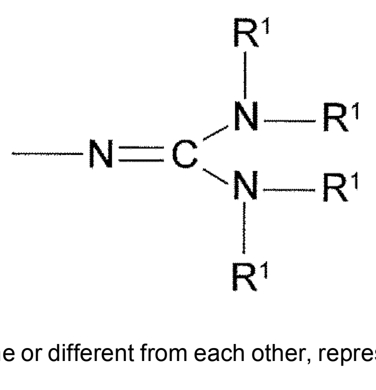

(A)

wherein $R^1$s are the same or different from each other, represent a hydrogen atom or a hydrocarbon group

having a carbon number of 1 to 20, and may be bonded to each other to form a ring structure;

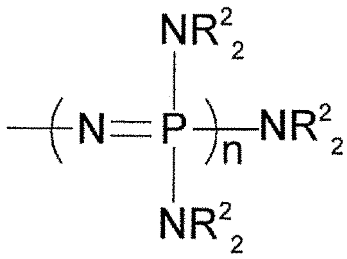

(B)

wherein $R^2$s are the same or different from each other and represent a hydrogen atom or a hydrocarbon group having a carbon number of 1 to 20, $R^2$s may be bonded to each other to form a ring structure, "n" represents an integral number of 0 to 3, and "n" corresponding to at least one R of the four Rs in the formula (1) is not 0.

2. The method for reducing a volatile organic compound according to claim 1, wherein the volatile organic compound is reduced according to a linear function in accordance with the amount of the compound represented by the above-described formula (1) .

3. The method for reducing a volatile organic compound according to claim 1, wherein

the polyurethane foam is a reaction product of a resin premix containing a polyol, and a polyisocyanate, and the content ratio of a cation portion of the compound represented by the above-described formula (1) with respect to the total amount of the polyol is 500 ppm or more.

4. A method for producing a polyurethane foam having a volatile organic compound reduced comprising:

a preparing step of preparing a resin premix containing a polyol, and a polyisocyanate,
an adding step of adding a compound represented by the following formula (1) to the resin premix, and
a foaming step of mixing and foaming the resin premix and the polyisocyanate;

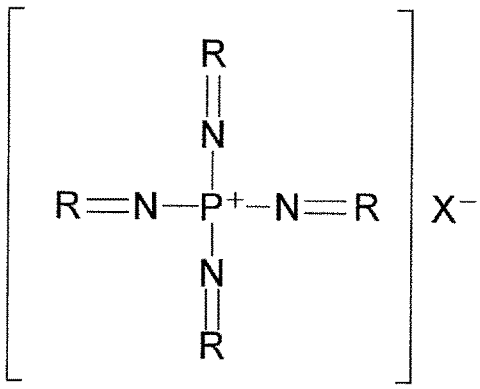

(1)

wherein -N=R represents the following partial structural formula (A) or the following partial structural formula (B), and $X^-$ represents an anion;

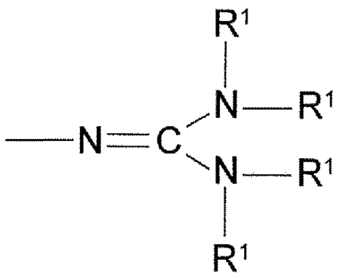

(A)

wherein $R^1$s are the same or different from each other, represent a hydrogen atom or a hydrocarbon group having a carbon number of 1 to 20, and may be bonded to each other to form a ring structure;

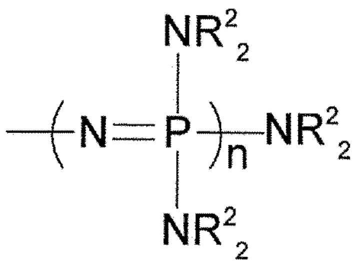

(B)

wherein $R^2$s are the same or different from each other and represent a hydrogen atom or a hydrocarbon group having a carbon number of 1 to 20, $R^2$s may be bonded to each other to form a ring structure, "n" represents an integral number of 0 to 3, and "n" corresponding to at least one R of the four Rs in the formula (1) is not 0.

**5.** A resin premix used in the method for producing a polyurethane foam according to claim 4 comprising:

a polyol and a compound represented by the following formula (1):

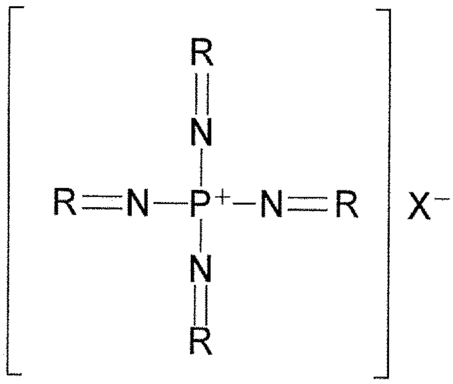

(1)

wherein -N=R represents the following partial structural formula (A) or the following partial structural formula (B), and $X^-$ represents an anion;

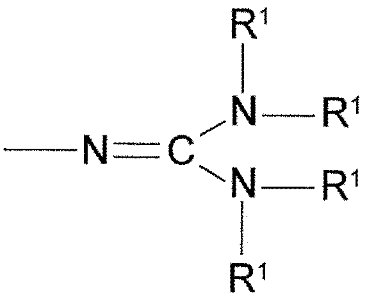

(A)

wherein, $R^1$s are the same or different from each other, represent a hydrogen atom or a hydrocarbon group having a carbon number of 1 to 20, and may be bonded to each other to form a ring structure;

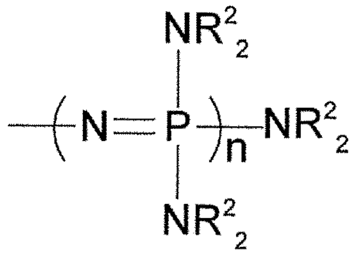

(B)

wherein, $R^2$s are the same or different from each other and represent a hydrogen atom or a hydrocarbon group having a carbon number of 1 to 20, $R^2$s may be bonded to each other to form a ring structure, "n" represents an integral number of 0 to 3, and "n" corresponding to at least one R of the four Rs in the formula (1) is not 0.

## Patentansprüche

1. Verfahren zur Reduzierung einer flüchtigen organischen Verbindung in einem Polyurethanschaum, wobei

der Polyurethanschaum eine Verbindung enthält, die durch die folgende Formel (1) dargestellt wird;
das Verfahren umfassend:

einen Herstellungsschritt des Herstellens einer Harzvormischung, enthaltend ein Polyol, und eines Polyisocyanat,
einen Zugabeschritt des Zugebens der Verbindung, die durch die folgende Formel (1) dargestellt wird, zu der Harzvormischung, und
einen Schäumungsschritt des Mischens und Schäumens der Harzvormischung und des Polyisocyanats;

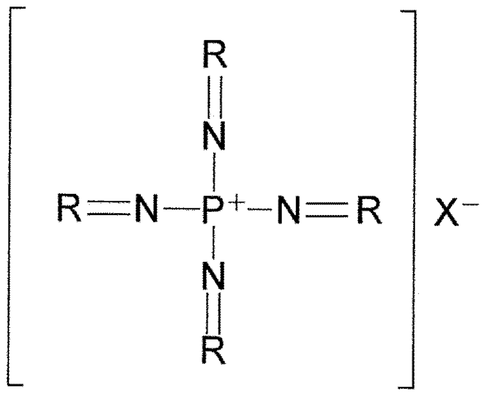

(1)

wobei -N=R die folgende Teilstrukturformel (A) oder die folgende Teilstrukturformel (B) darstellt und $X^-$ ein Anion darstellt;

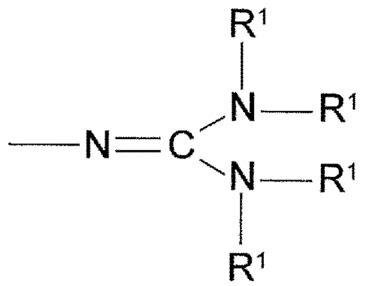

(A)

wobei die $R^1$s die gleichen oder voneinander verschieden sind, ein Wasserstoffatom oder eine Kohlenwasserstoffgruppe mit einer Kohlenstoffzahl von 1 bis 20 darstellen und miteinander verbunden sein können, um eine Ringstruktur zu bilden;

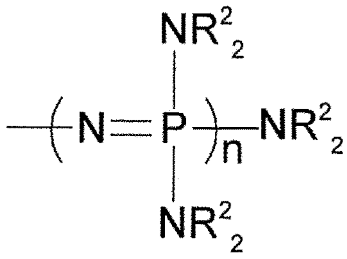

(B)

wobei die $R^2$s die gleichen oder voneinander verschieden sind und ein Wasserstoffatom oder eine Kohlenwasserstoffgruppe mit einer Kohlenstoffzahl von 1 bis 20 darstellen, die $R^2$s miteinander verbunden sein können, um eine Ringstruktur zu bilden, "n" eine ganze Zahl von 0 bis 3 darstellt und "n", das zu mindestens einem R der vier Rs in Formel (1) korrespondiert, nicht 0 ist.

**2.** Verfahren zur Reduzierung einer flüchtigen organischen Verbindung gemäß Anspruch 1, wobei die flüchtige organische Verbindung gemäß einer linearen Funktion entsprechend der Menge der Verbindung, die durch die oben beschriebene Formel (1) dargestellt wird, reduziert wird.

**3.** Verfahren zur Reduzierung einer flüchtigen organischen Verbindung gemäß Anspruch 1, wobei

der Polyurethanschaum ein Reaktionsprodukt einer Harzvormischung, enthaltend ein Polyol, und eines Polyisocyanats ist, und
das Gehaltsverhältnis eines Kationenanteils der Verbindung, die durch die oben beschriebene Formel (1) dargestellt wird, bezogen auf die Gesamtmenge des Polyols 500 ppm oder mehr beträgt.

**4.** Verfahren zur Herstellung eines Polyurethanschaums mit einer reduzierten flüchtigen organischen Verbindung, umfassend:

einen Herstellungsschritt des Herstellens einer Harzvormischung, enthaltend ein Polyol, und eines Polyisocyanat,
einen Zugabeschritt des Zugebens einer Verbindung, die durch die folgende Formel (1) dargestellt wird, zu der Harzvormischung, und
einen Schäumungsschritt des Mischens und Schäumens der Harzvormischung und des Polyisocyanats;

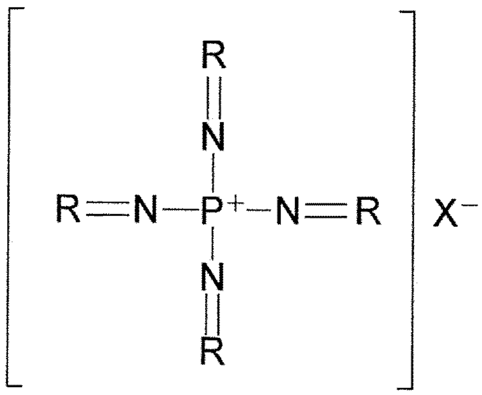

(1)

wobei -N=R die folgende Teilstrukturformel (A) oder die folgende Teilstrukturformel (B) darstellt und $X^-$ ein Anion darstellt;

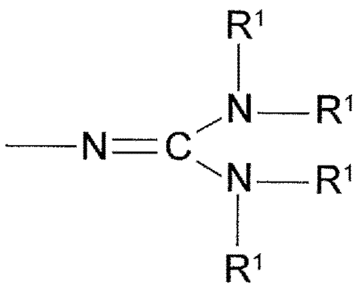

(A)

wobei die $R^1$s die gleichen oder voneinander verschieden sind, ein Wasserstoffatom oder eine Kohlenwasserstoffgruppe mit einer Kohlenstoffzahl von 1 bis 20 darstellen und miteinander verbunden sein können, um eine Ringstruktur zu bilden;

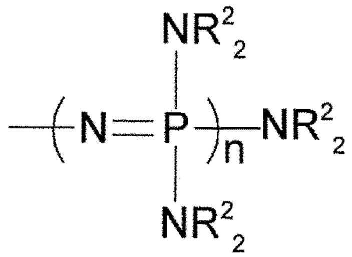

(B)

wobei die $R^2$s die gleichen oder voneinander verschieden sind und ein Wasserstoffatom oder eine Kohlenwasserstoffgruppe mit einer Kohlenstoffzahl von 1 bis 20 darstellen, die $R^2$s miteinander verbunden sein können, um eine Ringstruktur zu bilden, "n" eine ganze Zahl von 0 bis 3 darstellt und "n", das zu mindestes einem R der vier Rs in Formel (1) korrespondiert, nicht 0 ist.

**5.** Harzvormischung, die in dem Verfahren zur Herstellung eines Polyurethanschaums gemäß Anspruch 4 verwendet wird, umfassend:

ein Polyol und eine Verbindung, die durch die folgende Formel (1) dargestellt wird:

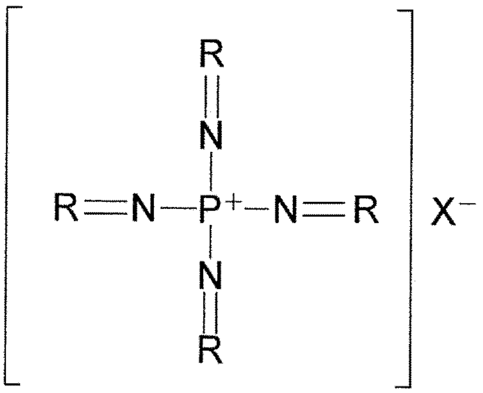

(1)

wobei -N=R die folgende Teilstrukturformel (A) oder die folgende Teilstrukturformel (B) darstellt und $X^-$ ein Anion darstellt;

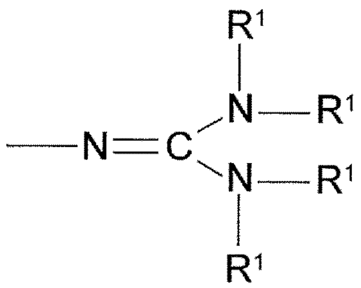

(A)

wobei die $R^1$s die gleichen oder voneinander verschieden sind, ein Wasserstoffatom oder eine Kohlenwasserstoffgruppe mit einer Kohlenstoffzahl von 1 bis 20 darstellen und miteinander verbunden sein können, um eine Ringstruktur zu bilden;

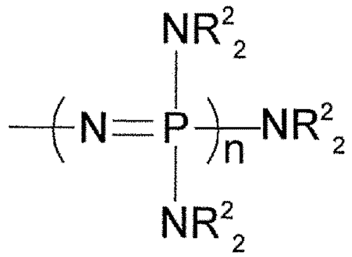

(B)

wobei die $R^2$s die gleichen oder voneinander verschieden sind und ein Wasserstoffatom oder eine Kohlenwasserstoffgruppe mit einer Kohlenstoffzahl von 1 bis 20 darstellen, die $R^2$s miteinander verbunden sein können, um eine Ringstruktur zu bilden, "n" eine ganze Zahl von 0 bis 3 darstellt und "n", das zu mindestes einem R der vier Rs in Formel (1) korrespondiert, nicht 0 ist.

## Revendications

**1.** Procédé de réduction d'un composé organique volatil dans une mousse de polyuréthane, dans lequel

la mousse de polyuréthane contient un composé représenté par la formule (1) suivante ;
le procédé comprenant :

une étape de préparation consistant à préparer un prémélange de résine contenant un polyol et un polyisocyanate,
une étape d'ajout consistant à ajouter le composé représenté par la formule (1) suivante au prémélange de résine, et
une étape de moussage consistant à mélanger et faire mousser le prémélange de résine et le polyisocyanate ;

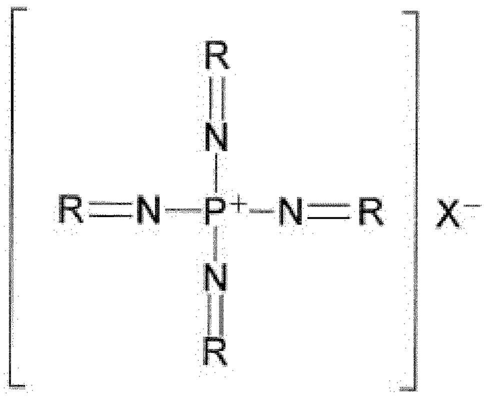

(1)

dans laquelle -N=R représente la formule structurale partielle (A) suivante ou la formule structurale partielle (B) suivante, et $X^-$ représente un anion ;

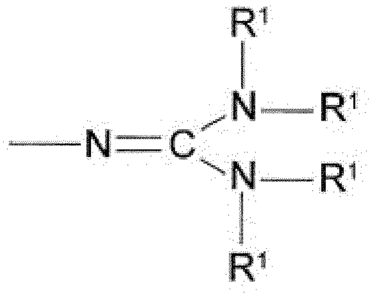

(A)

dans laquelle les $R^1$ sont identiques ou différents les uns des autres, représentent un atome d'hydrogène ou un groupe hydrocarboné présentant un nombre de carbone de 1 à 20, et peuvent être liés les uns aux autres pour former une structure cyclique ;

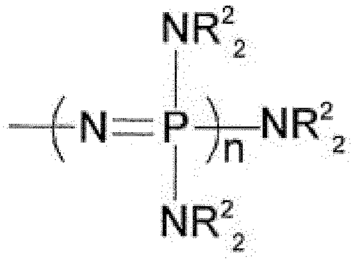

(B)

dans laquelle les $R^2$ sont identiques ou différents les uns des autres et représentent un atome d'hydrogène ou un groupe hydrocarboné présentant un nombre de carbone de 1 à 20, les $R^2$ peuvent être liés les uns aux autres pour former une structure cyclique, « n » représente un nombre entier de 0 à 3, et « n » correspondant à au moins un R des quatre R de la formule (1) n'est pas 0.

**2.** Procédé de réduction d'un composé organique volatil selon la revendication 1, dans lequel le composé organique volatil est réduit selon une fonction linéaire en fonction de la quantité du composé représenté par la formule (1) décrite ci-dessus.

**3.** Procédé de réduction d'un composé organique volatil selon la revendication 1, dans lequel

la mousse de polyuréthane est un produit de réaction d'un prémélange de résine contenant un polyol et un polyisocyanate, et
le rapport de teneur d'une partie cationique du composé représenté par la formule (1) décrite ci-dessus par rapport à la quantité totale du polyol est de 500 ppm ou plus.

**4.** Procédé de production d'une mousse de polyuréthane présentant un composé organique volatil réduit comprenant :

une étape de préparation consistant à préparer un prémélange de résine contenant un polyol et un polyisocyanate,
une étape d'ajout consistant à ajouter un composé représenté par la formule (1) suivante au prémélange de résine, et
une étape de moussage consistant à mélanger et faire mousser le prémélange de résine et le polyisocyanate ;

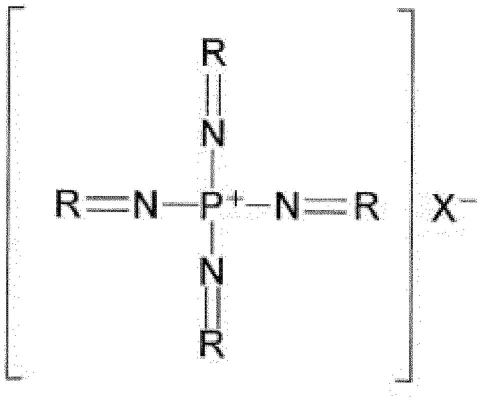

(1)

dans laquelle -N=R représente la formule structurale partielle (A) suivante ou la formule structurale partielle (B) suivante, et $X^-$ représente un anion ;

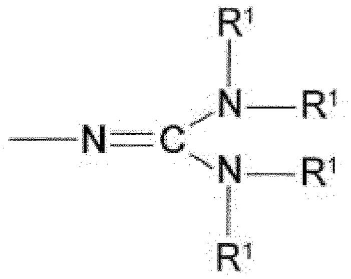

(A)

dans laquelle les $R^1$ sont identiques ou différents les uns des autres, représentent un atome d'hydrogène ou un groupe hydrocarboné présentant un nombre de carbone de 1 à 20, et peuvent être liés les uns aux autres pour former une structure cyclique ;

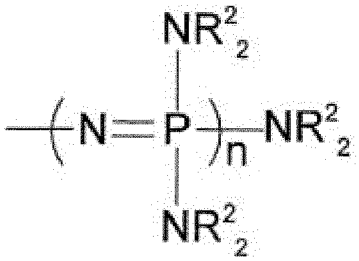

(B)

dans laquelle les $R^2$ sont identiques ou différents les uns des autres et représentent un atome d'hydrogène ou un groupe hydrocarboné présentant un nombre de carbone de 1 à 20, les $R^2$ peuvent être liés les uns aux autres pour former une structure cyclique, « n » représente un nombre entier de 0 à 3, et « n » correspondant à au moins un R des quatre R de la formule (1) n'est pas 0.

5. Prémélange de résine utilisé dans le procédé de production d'une mousse de polyuréthane selon la revendication 4, comprenant : un polyol et un composé représenté par la formule (1) suivante :

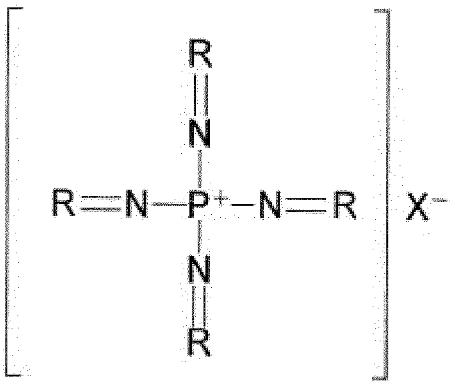

(1)

dans laquelle -N=R représente la formule structurale partielle (A) suivante ou la formule structurale partielle (B) suivante, et $X^-$ représente un anion ;

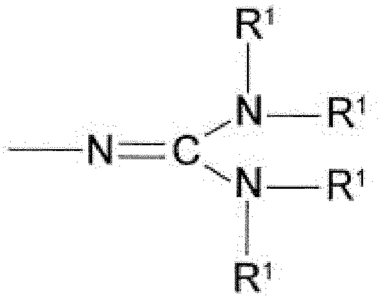

(A)

dans laquelle les $R^1$ sont identiques ou différents les uns des autres, représentent un atome d'hydrogène ou un groupe hydrocarboné présentant un nombre de carbone de 1 à 20, et peuvent être liés les uns aux autres pour former une structure cyclique ;

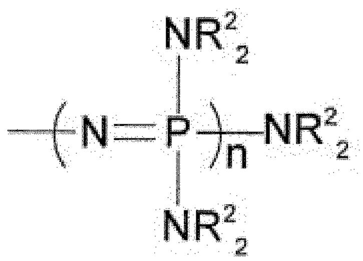

(B)

dans laquelle les $R^2$ sont identiques ou différents les uns des autres et représentent un atome d'hydrogène ou un groupe hydrocarboné présentant un nombre de carbones de 1 à 20, les $R^2$ peuvent être liés les uns aux autres pour former une structure cyclique, « n » représente un nombre entier de 0 à 3, et « n » correspondant à au moins un R des quatre R de la formule (1) n'est pas 0.

FIG. 1

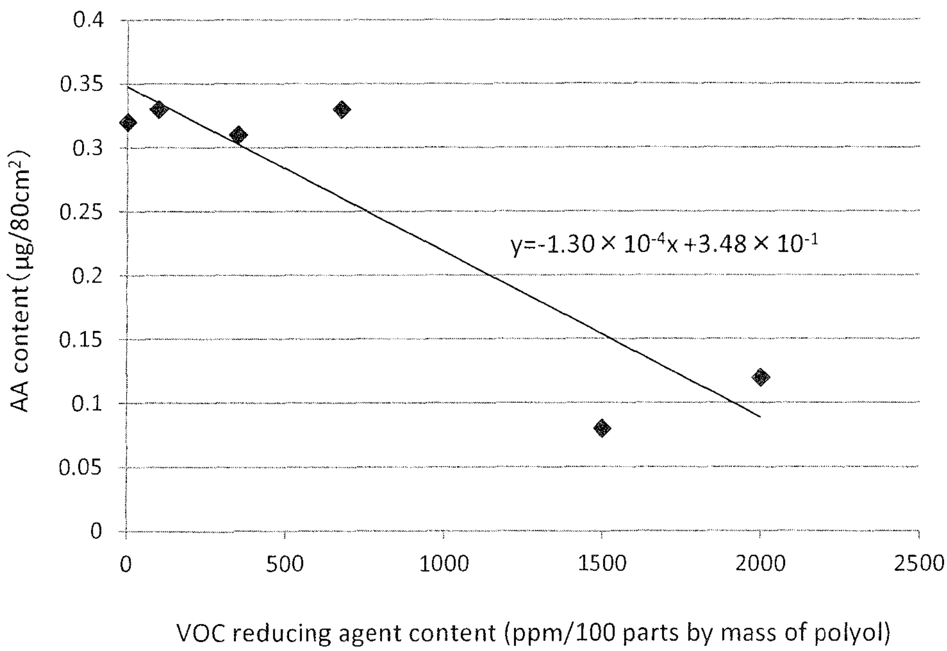
0.4
0.35
0.3
0.25
0.2
0.15
0.1
0.05
0
0
500
1000
1500
2000
2500
AA content (μg/80cm²)
y=-1.30 × 10⁻⁴x +3.48 × 10⁻¹
VOC reducing agent content (ppm/100 parts by mass of polyol)

FIG. 2

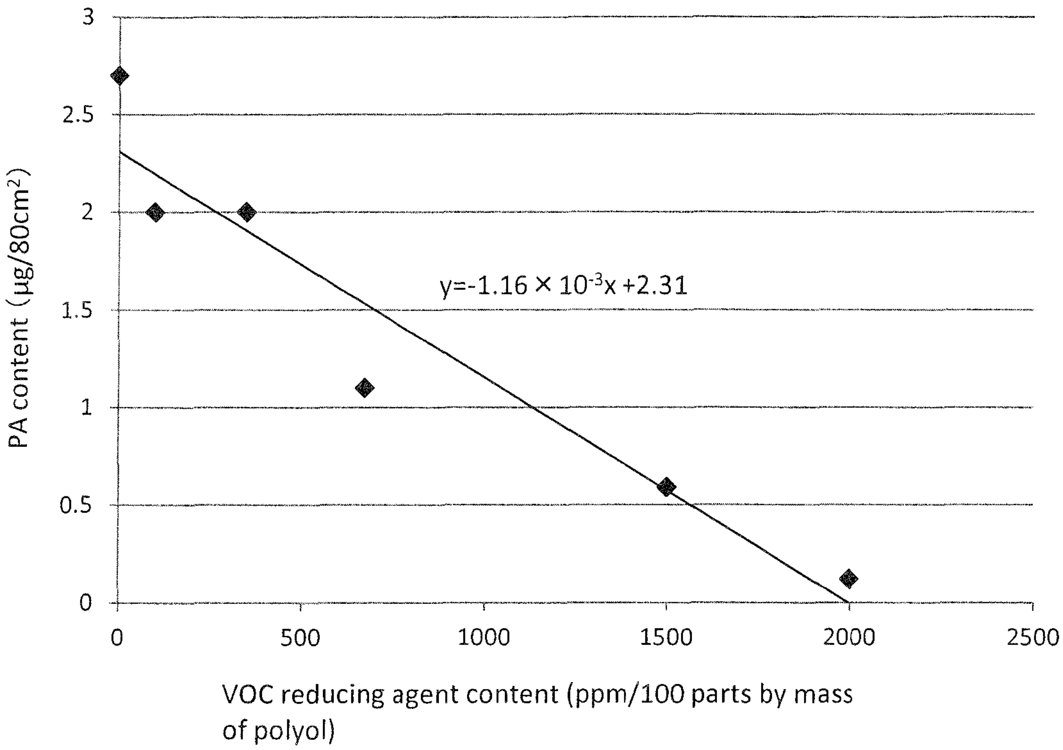
3
2.5
2
1.5
1
0.5
0
PA content (μg/80cm2)
y=-1.16 × 10-3x +2.31
0
500
1000
1500
2000
2500
VOC reducing agent content (ppm/100 parts by mass of polyol)

FIG. 3

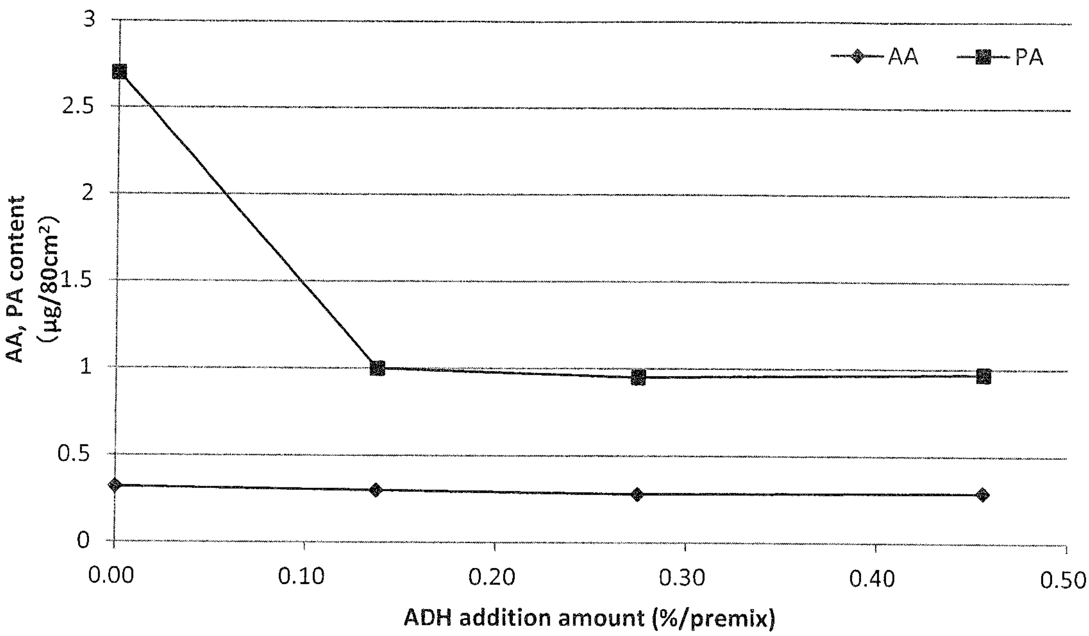
3
2.5
2
1.5
1
0.5
0
AA
PA
AA, PA content
(μg/80cm²)
0.00
0.10
0.20
0.30
0.40
0.50
ADH addition amount (%/premix)

FIG. 4

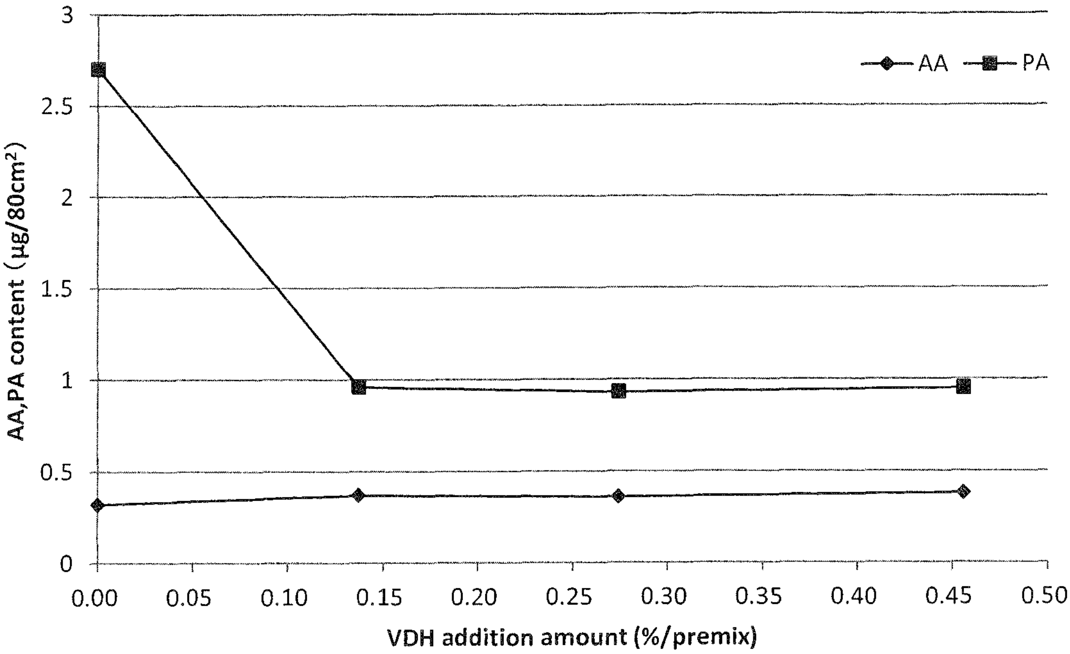
AA
PA
AA,PA content (μg/80cm²)
3
2.5
2
1.5
1
0.5
0
0.00
0.05
0.10
0.15
0.20
0.25
0.30
0.35
0.40
0.45
0.50
VDH addition amount (%/premix)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006182825 A
- DE 102006010034 A1
- EP 0791600 A1